(19) Europäisches Patentamt
European Patent Office
Office européen des brevets

(11) **EP 1 774 289 B1**

(12) **FASCICULE DE BREVET EUROPEEN**

(45) Date de publication et mention
de la délivrance du brevet:
**16.01.2008 Bulletin 2008/03**

(51) Int Cl.:
***G01N 21/41*** *(2006.01)*     ***G06T 11/00*** *(2006.01)*
***G01N 21/47*** *(2006.01)*

(21) Numéro de dépôt: **05764846.1**

(86) Numéro de dépôt international:
**PCT/FR2005/001436**

(22) Date de dépôt: **10.06.2005**

(87) Numéro de publication internationale:
**WO 2006/003311 (12.01.2006 Gazette 2006/02)**

(54) **DISPOSITIF POUR DETERMINER UN INDICE DE REFRACTION EN UN GRAND NOMBRE DE POINTS D'UN MILIEU PHYSIQUE, PAR EXAMPLE UNE PARTIE DU CORPS D'UN ETRE HUMAIN OU D'UN ANIMAL**

VORRICHTUNG ZUR BESTIMMUNG EINES BRECHUNGSINDEX IN EINER GROSSEN ANZAHL VON PUNKTEN EINER PHYSISCHEN UMGEBUNG, BEISPIELSWEISE EINEM TEIL EINES MENSCHLICHEN ODER TIERISCHEN KÖRPERS

DEVICE FOR DETERMINING A REFRACTIVE INDEX IN A LARGE NUMBER OF POINTS OF A PHYSICAL ENVIRONMENT, FOR EXAMPLE PART OF A HUMAN OR ANIMAL BODY

(84) Etats contractants désignés:
**AT BE BG CH CY CZ DE DK EE ES FI FR GB GR HU IE IS IT LI LT LU MC NL PL PT RO SE SI SK TR**

(30) Priorité: **16.06.2004 FR 0406497**
**18.11.2004 FR 0452677**
**01.04.2005 FR 0503183**

(43) Date de publication de la demande:
**18.04.2007 Bulletin 2007/16**

(73) Titulaire: **Beyrard, Norbert**
**01220 Divonne-Les-Bains (FR)**

(72) Inventeur: **Beyrard, Norbert**
**01220 Divonne-Les-Bains (FR)**

(74) Mandataire: **Moinas, Michel et al**
**Cabinet Michel Moinas**
**13 Chemin du Levant**
**01210 Ferney-Voltaire (FR)**

(56) Documents cités:
**WO-A-03/042670        US-A- 4 792 227**
**US-A- 5 588 032        US-A- 5 633 708**

**Description**

L'invention se rapporte à un dispositif pour déterminer un indice de réfraction en un grand nombre de points p, par exemple 10000, d'un milieu physique.

Le document US 4 792 227 divulgue un dispositif pour déterminer l'indice de réfraction d'un disque optique dans son épaisseur. Le dispositif comprend un faisceau laser, un polariseur pour polariser le faisceau laser, un support orientable par rapport à la direction du faisceau laser pour que ce dernier frappe le disque optique sous un certain angle d'incidence et un moyen de détection d'un faisceau laser pour recevoir le faisceau laser après sa traversée à travers le disque optique.

Le document US 5 588 032 divulgue un dispositif pour scanner par exemple différentes parties d'un individu, en utilisant notamment des ondes lumineuses. Le dispositif fonctionne avec une méthode d'imagerie par diffraction de l'énergie qui est transmise à la partie du corps à examiner. Le dispositif comprend un laser, un moyen pour détecter l'énergie du laser transmise à la partie du corps à examiner et diffractée par cette dernière et un ordinateur pour traiter l'énergie diffractée en amplitude et en phase pour en déduire un champ de diffraction mesurée et le comparer à un champ de diffraction estimé. L'ordinateur est programmé pour traiter de façon itérative le champ de diffraction jusqu'à converger avec les mesures. Une image du corps est alors obtenue, représentée par la cartographie du champ de la diffraction.

L'utilisation, par exemple, d'un scanner à laser infrarouge pose le problème de la recherche du chemin optique lorsque l'on traverse un milieu composé de strates d'indice de réfraction différente. Il arrive souvent que l'on ignore l'indice de réfraction de tous les points du milieu traversé.

A cet effet, l'invention a pour objet, un dispositif pour déterminer un indice de réfraction en un grand nombre de points p, par exemple 10000, d'un milieu physique, chaque point étant repéré par un repère fixe en occupant le barycentre d'un pavé élémentaire où p pavés élémentaires réalisent un pavage du milieu physique, caractérisé en ce qu'il comprend :

- un laser lumineux, par exemple à rayon infrarouge, déplaçable d'un pas élémentaire suivant un guide de déplacement ou fixe par rapport à un miroir déplaçable du pas élémentaire suivant le guide de déplacement pour effectuer une série de p tirs coplanaires chacun partant d'un point de départ Ap repéré par rapport au guide de déplacement et arrivant en un point d'arrivée Bp repéré par un moyen de détection après avoir traversé le milieu physique en suivant un chemin optique défini comme étant le plus court trajet optique entre les deux points Ap et Bp ;

- un compteur de temps synchronisé avec chaque tir pour enregistrer un instant Tp où chaque tir atteint le point d'arrivée Bp à compter d'un instant initial où le tir est parti du point de départ Ap ; et

- un ordinateur dûment programmé pour effectuer les étapes suivantes :

   (1) rechercher le chemin optique parmi des trajets optiques partant tous du point de départ Ap et arrivant tous au point d'arrivée Bp, chaque trajet optique étant défini par une séquence de chemins optiques élémentaires (L) chacun égal au produit de deux termes où le premier terme est un module d'un vecteur reliant deux barycentres de deux pavés élémentaires adjacents et où le deuxième terme est un indice de réfraction estimé en chaque barycentre ;

   (2) à partir de p équations linéaires reliant, pour chacun des p chemins optiques recherchés, les chemins optiques élémentaires (L) et les indices de réfraction (N) au temps de traversée Tp détecté, construire une matrice carrée des chemins optiques élémentaires [L], un vecteur des indices de réfraction des pavés élémentaires [N] et un vecteur des temps de traversée du rayon lumineux [T] et résoudre l'équation matricielle :

$$[N] * [L] = [T]$$

   par rapport au vecteur des indices de réfraction des pavés élémentaires [N] ; et

   (3) réitérer les étapes (1) et (2) pour rechercher de nouveaux chemins optiques avec les indices de réfraction des pavés élémentaires calculés lors d'une itération immédiatement précédente, résoudre l'équation matricielle avec les nouveaux chemins optiques élémentaires correspondant aux nouveaux chemins optiques recherchés et obtenir un nouveau vecteur des indices de réfraction des pavés élémentaires jusqu'à ce que la matrice des chemins optiques élémentaires [L] converge et que le vecteur des indices de réfraction des pavés élémentaires [N] converge également.

Avantageusement, le dispositif est caractérisé en ce que, pour déterminer un coefficient d'atténuation en tout point du milieu physique où un indice de réfraction a été déterminé :

- le moyen de détection est conformé pour détecter une variation d'intensité ($\Delta$Ip) de chaque tir de la série entre le point de départ Ap et le point d'arrivée Bp en considération d'une atténuation d'intensité lumineuse le long des chemins optiques élémentaires suivis par chaque tir, fonction d'un coefficient d'atténuation E affecté à chaque pavé élémentaire ; et

- l'ordinateur est dûment programmé pour effectuer l'étape supplémentaire suivante :

(4) partir de p équations linéaires reliant les chemins optiques élémentaires (L) pour lesquels le vecteur des indices de réfraction des pavés élémentaires a convergé à l'étape (3) et les coefficients d'atténuation (E) des pavés élémentaires (100) à la variation d'intensité ($\Delta$Ip) de chacun des p tirs de la série, construire un vecteur des coefficients d'atténuation des pavés élémentaires [E] et un vecteur des variations d'intensité [$\Delta$Ip] puis par une méthode mathématique d'algèbre linéaire, résoudre l'équation matricielle :

$$[E] * [L] = [\Delta Ip]$$

par rapport au vecteur des coefficients d'atténuation des pavés élémentaires [E].

De préférence, l'ordinateur effectue l'étape (1) en étant dûment programmé pour rechercher le chemin optique par une méthode de calcul d'un chemin critique minimal à partir d'estimations des indices de réfraction obtenues par une méthode d'imagerie mettant en oeuvre un scanner à rayons X, une unité d'imagerie à résonance magnétique nucléaire ou encore une unité d'échographie.

Dans un mode de réalisation de l'invention, le dispositif est caractérisé en ce que, pour conduire à une estimation des indices de réfraction à plus grande résolution spatiale par rapport au milieu physique :

- le guide de déplacement est pourvu d'un micro-actionneur déplaçant le laser lumineux ou le miroir suivant le guide de déplacement d'un micro-pas élémentaire égal au pas élémentaire divisé par un facteur d'amplification K pour effectuer deux séries croisées de tirs X et Y tirs respectivement, tous coplanaires et partant chacun d'un point de départ Ax ou Ay repéré par rapport au guide de déplacement et arrivant en un point d'arrivée Bx ou By repéré par le moyen de détection après avoir traversé le milieu physique en suivant un chemin optique défini comme étant le plus court trajet optique entre les deux points Ax et Bx ou Ay et By, et

- l'ordinateur est dûment programmé pour effectuer les étapes supplémentaires suivantes :

(5) rechercher le chemin optique parmi un grand nombre de trajets optiques partant tous du point de départ Ax ou Ay et arrivant tous au point d'arrivée Bx ou By en étant définis par une séquence de chemins optiques micro-élémentaires ($\mu$L) chacun égal au produit de deux termes où le premier terme est un module d'un vecteur reliant deux barycentres de deux micro-pavés élémentaires adjacents et où le deuxième terme est un indice de réfraction (N') en chaque barycentre de chaque micro-pavé élémentaire égal à l'indice de réfraction du pavé élémentaire dont sont issus les micro-pavés élémentaires après la division par le facteur d'amplification K et pour lesquels le vecteur des indices de réfraction des pavés élémentaires [N] a convergé en (3), et à partir de K*p = X + Y équations linéaires reliant, pour chacun des chemins optiques recherchés de l'une X et de l'autre Y des deux séries de tirs, les chemins optiques micro-élémentaires ($\mu$L) et les indices de réfraction des micro-pavés élémentaires (N') au temps de traversée Tx ou Ty détecté à l'aide du compteur de temps synchronisé avec chaque tir atteignant le point d'arrivée Bx ou By à compter d'un instant initial où le tir est parti du point de départ Ax ou Ay, construire une matrice carrée des chemins optiques micro-élémentaires [$\mu$L], un vecteur des indices de réfraction des micro-pavés élémentaires [N'] et un vecteur [T] des temps de traversée du rayon lumineux ; puis

(6) ajuster l'indice de réfraction en chaque micro-pavé élémentaire par une méthode des moindres carrés en tenant compte de contraintes imposées par les valeurs de bordures que constituent les temps de traversée détectés Tx ou Ty en utilisant la formule suivante :

$$Cij = Bij + \left(\frac{1}{n}\right)^* (\rho j - \sum_1^n Bij) + \left(\frac{1}{m}\right)^* (ci - \sum_{j=1}^m Bij) - \left(\frac{1}{nm}\right)^*$$
$$(\sum_{j=1}^m \rho j - \sum ijBij)$$

où, dans cette formule,

Cij = la valeur recherchée

Bij = la valeur estimée initialement

(n) = le nombre de lignes d'une matrice représentative d'un tableau des indices de réfraction des pavés micro-élémentaires (n>X)

(m) = le nombre de colonnes d'une matrice représentative d'un tableau des indices de réfraction des pavés micro-élémentaires (m>Y)

$$\sum_{i=1}^n Cij = \rho j \text{ pour toutes les valeurs de i, la contrainte de la colonne j}$$

$$\sum_{j=1}^m Cij = ci \text{ pour toutes les valeurs de j, la contrainte de la ligne i.}$$

Avantageusement, le dispositif est caractérisé en ce que, caractérisé en ce que, pour conduire à une estimation des coefficients d'atténuation à plus grande résolution spatiale par rapport au milieu physique :

- l'ordinateur (106) est dûment programmé pour effectuer les étapes supplémentaires suivantes:

(7) à partir d'une variation d'intensité ($\Delta$Ix, $\Delta$Iy) détectée par le moyen de détection pour chaque tir des deux séries croisées X et Y entre le point de départ Ax ou Ay et le point d'arrivée Bx ou By en considération d'une atténuation d'intensité lumineuse le long des chemins optiques micro-élémentaires suivis par chaque tir, fonction d'un coefficient d'atténuation (E') affecté à chaque micro-pavé élémentaire en étant égal au coefficient d'atténuation (E) du pavé élémentaire dont sont issus les micro-pavés élémentaires divisé par le facteur d'amplification K et à partir de K*p = X + Y équations linéaires reliant, pour chacun des chemins optiques recherchés de l'une X et de l'autre Y des deux séries de tirs, les chemins optiques micro-élémentaires ($\mu$L) et les coefficients d'atténuation des micro-pavés élémentaires (E') aux variations d'intensité lumineuse ($\Delta$Ix, $\Delta$Iy), construire une matrice carrée des chemins optiques micro-élémentaires [$\mu$L], un vecteur des coefficients d'atténuation des micro-pavés élémentaires [$\mu$E'] et un vecteur [$\Delta$I] des variations d'intensité lumineuse ; et

(8) ajuster le coefficient d'atténuation en chaque micro-pavé élémentaire par une méthode des moindres carrés en tenant compte de contraintes imposées par les valeurs de bordures que constituent les variations d'intensité lumineuses détectées $\Delta$Ix ou $\Delta$Iy en utilisant la formule suivante :

$$Cij = Bij + \left(\frac{1}{n}\right)^* (\rho j - \sum_1^n Bij) + \left(\frac{1}{m}\right)^* (ci - \sum_{j=1}^m Bij) - \left(\frac{1}{nm}\right)^*$$
$$(\sum_{j=1}^m \rho j - \sum ijBij)$$

où, dans cette formule,

Cij = la valeur recherchée

Bij = la valeur estimée initialement

(n) = le nombre de lignes d'une matrice représentative d'un tableau des coefficients d'atténuation des pavés micro-élémentaires

(m) = le nombre de colonnes d'une matrice représentative d'un tableau des coefficients d'atténuation des pavés micro-élémentaires

$$\sum_{i=1}^{n} Cij = \rho j \quad \text{pour toutes les valeurs de i, la contrainte de la colonne j}$$

$$\sum_{j=1}^{m} Cij = ci \quad \text{pour toutes les valeurs de j, la contrainte de la ligne i.}$$

Dans le cas particulier où le milieu physique est une partie du corps d'un être humain ou d'un animal et pour traiter une singularité des indices de réfraction représentative d'une tumeur ou d'une autre pathologie d'une partie de ce corps, le dispositif est caractérisé en ce que : dans le cas où le milieu physique est une partie du corps d'un être humain ou d'un animal et pour traiter une singularité des indices de réfraction représentative d'une tumeur ou d'une autre pathologie d'une partie de ce corps,

- il comprend un laser lumineux de traitement à impulsions pour générer un faisceau pendant un temps très court, par exemple de 100 femtosecondes, et avec une très haute énergie, monté sur le guide de déplacement et pourvu d'une lentille déplaçable pour régler une distance focale suivant un axe neutre de la lentille et faire converger le faisceau en point focal de l'axe neutre; et

- l'ordinateur est dûment programmé pour effectuer les étapes supplémentaires suivantes :

(9) rechercher une singularité C parmi les indices de réfraction calculés à l'issue de l'étape (3) ou ajustés à l'issue de l'étape (6) ou parmi les coefficients d'atténuation calculés à l'issue de l'étape (4) ou ajustés à l'issue de l'étape (8) et repérer les pavés ou les micro-pavés élémentaires de la singularité C par rapport au guide de déplacement, et

(10) rechercher, pour plusieurs points de la lentille, le chemin optique entre un point de départ Aq et la singularité C considérée comme point d'arrivée et calculer un angle de convergence moyenné sur les différents chemins optiques recherchés partant des différents points de la lentille et vérifiant une condition symétrie par rapport au faisceau, pour régler la distance focale en un point focal virtuel déterminé par l'angle de convergence en considérant que le faisceau voyage dans l'air de sorte à focaliser ce dernier sur le point focal virtuel afin que la singularité C coïncide avec un point focal réel pour être détruite, par exemple par vaporisation, sous l'effet d'impulsions répétées du laser lumineux.

D'autres caractéristiques avantageuses de l'invention sont décrites à l'aide de plusieurs modes d'exécution illustrés par les dessins.

La figure 1 représente des points d'un milieu physique, chaque point occupant le barycentre d'un pavé élémentaire où les pavés élémentaires réalisent un pavage du milieu physique.

La figure 2 est une représentation graphique d'une matrice carrée de 10 000 points d'indices de réfraction variant aléatoirement entre 1 et 2 et de cinq chemins optiques entre un point de départ et cinq points d'arrivée.

La figure 3 est un schéma de principe d'un dispositif selon un premier mode d'exécution l'invention.

La figure 4 est un schéma de principe d'un dispositif selon un deuxième mode d'exécution l'invention.

La figure 5 est un schéma de principe d'un dispositif analogue à celui de la figure 3.

Le dispositif selon l'invention met en oeuvre un procédé de calcul du chemin optique et ses applications à la détection d'objets, notamment en milieu aquatique, ou à la réalisation d'un processus tomodensitométrique exposé ci-après. En effet, l'utilisation de rayonnements infrarouge, cohérents ou non, à travers de milieux hétérogènes suppose que l'on puisse tracer le chemin optique dans le milieu. Ceci suppose que l'on connaisse les indices de réfraction en tous les points du milieu étudié, et la ou les réflexions éventuelles, totales ou partielles, au cours du trajet.

Les expérimentateurs sont donc confrontés à différents cas. Dans le premier cas, on connaît le milieu traversé et l'indice de réfraction de chaque point. Dans le deuxième cas, on ne dispose que d'informations imparfaites.

Dans le premier cas, deux méthodes peuvent être utilisées pour calculer le chemin optique, celle que utilise la deuxième loi de DESCARTES ou une méthode utilisant les principes formulés par FERMAT si l'on connaît l'indice de réfraction en tous points

La deuxième loi de DESCARTES sur la réfraction exprime la déviation d'un rayon lumineux traversant une interface entre deux milieux, par la relation ci-dessous, laquelle indique que l'angle incident dans le milieu 1 est lié à l'angle réfracté dans le milieu 2 par l'équation suivante :

$$n_2 \sin i_2 = n_1 \sin i_1$$

dans laquelle:

n1 est l'indice de réfraction, i1, l'angle de réfraction du premier milieu

n2 est l'indice de réfraction, i2, l'angle de réfraction du deuxième milieu

On peut aussi utiliser le principe de FERMAT pour calculer le chemin optique entre deux points. En effet, le principe de Fermat, peut s'énoncer de la manière suivante : toute trajectoire suivie par une radiation correspond à un chemin optique stationnaire, tel que la somme des chemins optiques élémentaires est minimale. Un chemin optique élémentaire est le produit de la longueur du vecteur reliant deux points, par l'indice de réfraction du milieu traversé.

De manière plus générale, on peut écrire l'expression suivante pour le chemin optique entre un point A et un point B:

$$L = \int_A^B nds$$

Nous rappelons que le chemin optique est celui qui correspond à un trajet, parmi les différents trajets possibles tel que la somme des chemins optiques élémentaires consécutifs constituant ledit trajet est minimale. Chacun des chemins élémentaires optiques est égal au produit de la distance géométrique entre les extrémités du vecteur par l'indice de réfraction du milieu traversé.

L'auteur de la présente invention a conçu une méthode originale pour calculer le chemin optique en utilisant un procédé qui permet dans un graphe de vecteurs reliant différents points d'établir non pas le chemin le plus long, mais la trajectoire la plus courte.

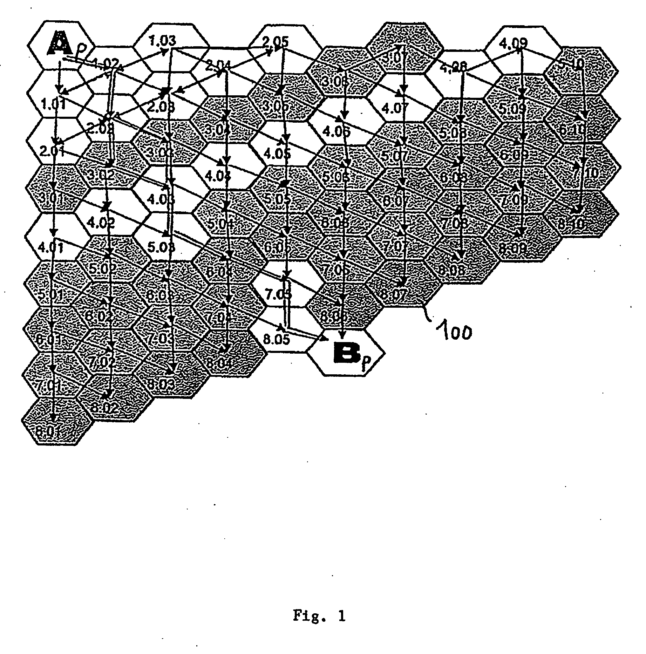

Lorsque l'on est dans une situation plus complexe, par exemple celle représentée par la figure 1, on ne connaît que le point de départ et le point d'arrivée du rayon et l'on utilisera pour tracer le chemin optique le principe de Fermat. L'utilisation de ce principe est possible en utilisant la méthode du chemin critique, qui permet de calculer une trajectoire lorsque l'on est dans le cadre d'un réseau de vecteurs reliant différents points, d'un point A à un point B par exemple. Dans ce cas, la méthode du chemin critique permet de calculer le chemin le plus long, lequel peut être obtenu en substituant au vecteur élémentaire de trajectoire, un vecteur égal à un majorant moins le vecteur élémentaire de trajectoire, ainsi :

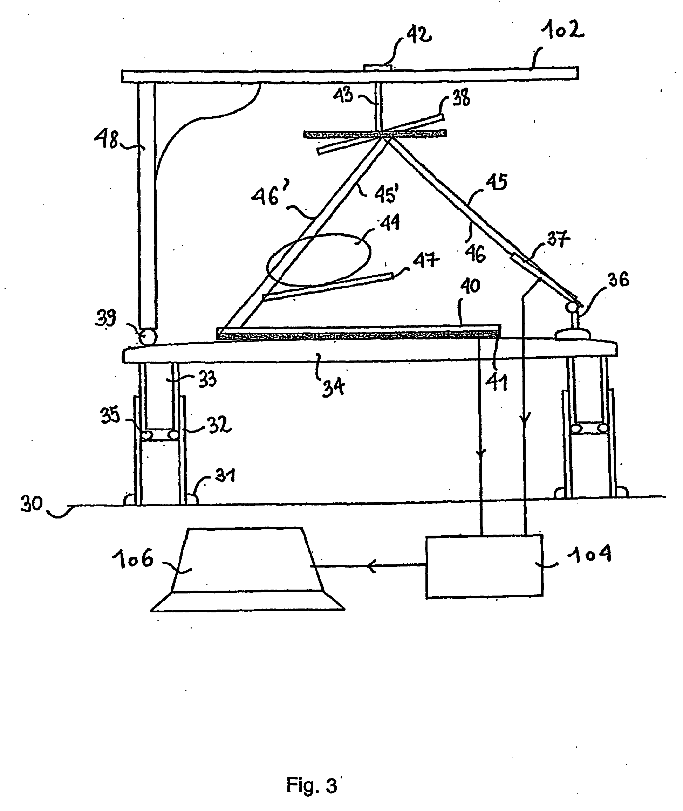

- pour aller par exemple du point A au Point 1.2 (au centre de la strate I du graphe de la figure 3), la trajectoire élémentaire sera égale à :

$$M - 0.5L_1 * 1.003 - 0.5L_{1.2} * 1.003$$

- pour aller du point 1.1 au point 2.3, la trajectoire élémentaire sera égale à :

$$M - 0.5L_{1,2} \,{}^*1.003 - 0.5L_{2,3} \,{}^*1.333$$

La méthode du chemin critique déterminera donc la trajectoire la plus courte, pour des valeurs de Lij, c'est à dire de la distance de traversée de chaque élément hexagonal dessiné sur le graphique de la figure1.

Il est possible de remplacer le processus de calcul du chemin critique par une méthode de calcul du chemin minimal. L'avantage relatif à l'utilisation de la méthode du chemin critique est que des logiciels sont disponibles.

Dès 1965, l'auteur a mis au point un procédé d'établissement du chemin critique par une méthode des antécédents, la méthode TELOR. Dans le contexte de cette invention, il s'est inspiré de cette méthode pour tracer directement un chemin optique en se référant étape par étape à la valeur minimale des antécédents indiqués.

En se référant au graphe de la figure 1, à partir du point A, on peut tracer 3 vecteurs, aboutissant aux points 1.01, 1.02 et 1.03. Le chemin le plus court à partir de A, aboutit au point 1.02, puisque sa longueur est égale à 1.003. Si l'on passe à l'étape suivante, passer de la couche 1 à la couche 2, nous avons dessiné 9 vecteurs, partant-des points 1.01, 1.02 et 1.03, ce qui nous donne le chemin allant de l'origine à l'un quelconque des points indiqués, en ajoutant à la valeur du vecteur (longueur), les valeurs des vecteurs antécédents. Par exemple, le vecteur 8, qui va du point 1.02 au point 2.02, a deux antécédents, les vecteurs 2 (A, 1.02) et 4 (1.01, 1.02). La longueur la plus courte est celle correspondant au 2.02 qui se trouve sur le chemin optique de la trajectoire recherchée.

On procédera ainsi pas à pas du vecteur A au vecteur B, on déterminera le chemin optique qui d'ailleurs dans notre exemple, comporte une divergence tracée sur la figure 3. Les deux chemins optiques sont alors les suivants :

- A, 1.02, 2.02, 3.02, 4.03, 5.03, 6.04, 7.05, 8.05, B

- A, 1.02, 2.02, 3.03, 4.03, 5.03, 6.04, 7.05, 8.05, B

Cet exemple montre que lorsque l'on traverse un milieu totalement cohérent, ce qui est le cas pour la couche N°3, le chemin optique peut prendre deux voies différentes, même s'il s'agit d'une lumière cohérente.

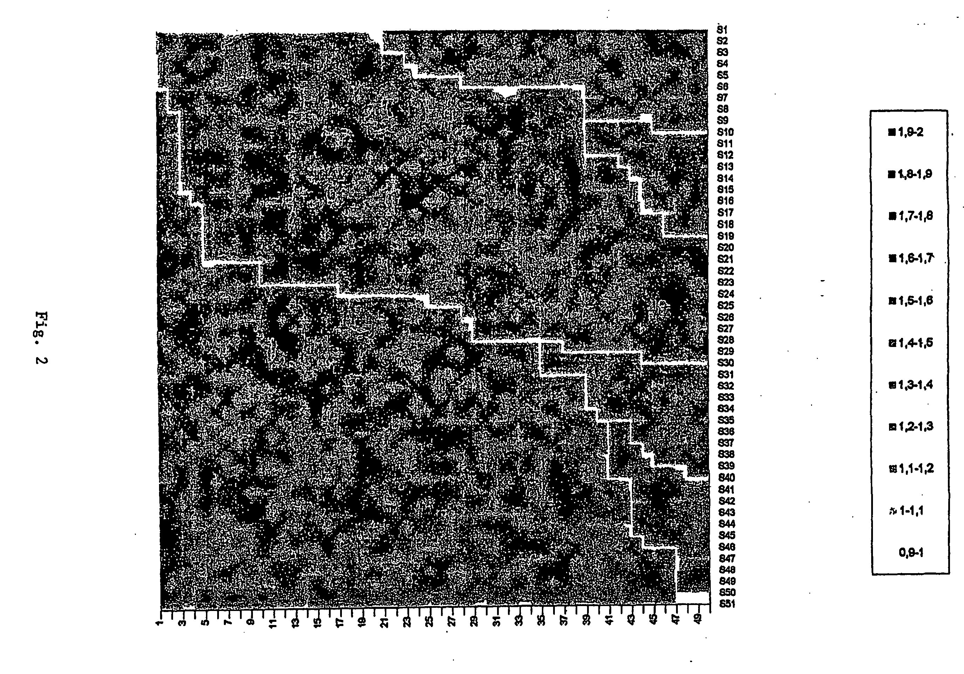

Le système permet aussi à partir d'un point, de tracer un grand nombre de chemins, correspondant, par exemple, à des balayages du rayon laser, comme illustré par la figure 2.

Mais il arrive souvent que l'on ignore l'indice de réfraction de tous les points du milieu traversé. Dans ce deuxième cas, un dispositif selon l'invention est mis en oeuvre de la manière suivante :

1/ on effectue une évaluation de la nature du milieu, par exemple grâce un premier examen réalisé par exemple par un scanner à rayons X, à faible définition de l'ordre de 1 mm.

2/ on découpe le plan densitométrique, soit sous forme de carrés par exemple de 100 microns, soit sous forme plus subtil par un pavage hexagonal tel que dessiné dans le graphe de la figure 1.

3/ on obtient, grâce à la connaissance des matières du milieu traversé une estimation de l'indice de réfraction pour chacun des carrés ou chacun des éléments hexagonaux.

4/ on trace un graphe allant du point A au point B, et passant par tous les centres des carrés élémentaires ou des hexagones élémentaires.

5/ on affecte à chaque vecteur du graphe, une valeur égale à un majorant diminué de la valeur du chemin optique élémentaire, ou l'on procède par la recherche directe du chemin minimal.

6/ on détermine le chemin critique de ce graphe qui est donc égal à la somme des majorants moins la somme des chemins optiques élémentaires, on obtient ainsi le chemin optique recherché. On peut aussi procéder par la recherche directe du chemin minimal.

7/ Ce chemin optique correspond à une relation linéaire entre les chemins optiques élémentaires, c'est à dire les valeurs des indices de chaque mini zones ou pavés élémentaires.

8/ on réédite l'expérience pour un grand nombre, par exemple p égal à 10000, de points de départ Ap et de points d'arrivée Bp et l'on obtient ainsi un ensemble de relations linéaires, reliant entre elles les valeurs des indices de réfraction recherchés.

9/ on résout par l'algèbre linéaire, l'équation ainsi posée pour obtenir la valeur réelle des indices de chaque mini zones.

10/ on dispose ainsi d'un premier calcul des indices de réfraction.

11/ On réitère l'opération jusqu'au moment où les résultats obtenus sont physiquement satisfaisant.

Autrement dit, le dispositif selon l'invention met en oeuvre une méthode dans laquelle on suppose que l'on dispose d'informations sur le milieu permettant d'estimer l'indice de réfraction de tous les points du milieu observé, on calcule un chemin optique probable entre un point A et un autre point B, ce qui conduit à établir une relation linéaire entre les indices le long du trajet, on répète ces calculs pour un ensemble suffisant de points Ap et Bp, d'où l'on peut déduire p équations pour p points, et on calcule les indices de réfraction en p points, on réitère l'opération jusqu'au moment où les résultats convergent sur le plan géométrique.

En effet dans un grand nombre d'applications le trajet d'un rayon lumineux, ou chemin optique, doit être calculé pour vérifier ou réaliser des matériels à vocation optique, pour détecter des ou objets ou des obstacles, ou encore pour établir des images.

Ainsi dans cette invention, l'auteur a examiné de manière générale de quelle façon les indices de réfraction pouvaient être établis lorsqu'on dispose d'informations insuffisantes.

Dans une première étape, on effectue une évaluation de l'indice de réfraction en chacun des points par exemple par la connaissance du milieu que donne une image obtenue par scanner X, IRM (imagerie par résonance magnétique) ou échographie. En effet, il existe une certaine corrélation entre le coefficient d'atténuation en chaque point que montre l'image obtenue par exemple par scanner X, (ou autrement), et l'indice de réfraction dans la mesure où l'on peut définir le milieu probable auquel correspond une certaine zone de l'image produite par le scanner X., ou tout autre méthode d'imagerie médicale interne, Il est clair que les différents tissus humains, os, graisse, etc. apparaissent dans l'image de manière différente.

Dans une seconde étape, on peut déterminer la trajectoire entre un point A et un point B, comme cela est montré par exemple, dans le pavage hexagonal et dans le calcul qui a été appliqué à la recherche du chemin optique dans ce cas. Si l'on reprend la formulation précédente (voir P 4 lignes 13 à 16), on peut remplacer les coefficients indiqués de 1.003 et de 1.333 correspondants aux deux milieux supposés connus, par des inconnues, ce qui donnerait une relation tout le long du chemin optique, s'écrivant ainsi, pour le p-ième tir :

$$0.5NA + N1.02 + N2.02 + N3.03 + N4.03 + N5.03 + N6.04 + N7.05 + N8.05 + 0.5B$$

En effectuant un changement de variable simple, en constatant que la distance parcourue est proportionnelle à la vitesse Vp=K/Np, ce qui conduit à ce que le l'indice de réfraction est proportionnel au temps de parcours Tp d'une distance donnée, on peut établir une relation linéaire entre les Nn proportionnels au temps de parcours (à une constante près) et dans le cas d'un pavage hexagonal pour le p-ième tir

$$5NA + \ldots\ldots\ldots\ldots\ldots\ldots\ldots\ldots\ldots\ldots\ldots + 0.5NB = Tp$$

En effet, à chaque indice de réfraction correspond une vitesse de la lumière et l'on peut mesurer par le temps entre A et B, la valeur Tp du parcours optique. Cette valeur Tp est observable, par exemple pour une longueur de 10 cms le temps de parcours dans l'air est de 0.333 nanosecondes, alors que les dispositifs actuels permettent de mesurer des femtosecondes soit des temps un million de fois plus petits que la nanoseconde

Si l'on dispose de p chemins optiques pour p points, on résoudra par l'algèbre linéaire le calcul de la valeur des indices de réfraction en tous points, à condition que les chemins optiques restent inchangés dans chaque cas.

Comme l'on est pas sûr que la première évaluation soit bonne, on substituera les valeurs de la deuxième évaluation, on recalculera les chemins optiques, jusqu'au moment où l'indice de réfraction d'une zone considérée n'évoluera plus dans le processus de calcul ou de manière plus commode en admettant que l'on a atteint une précision suffisante lorsque la somme des écarts ou la somme des écarts types indiquant la variation globale entre deux niveaux de calcul sera inférieure à un seuil déterminé à l'avance.

On admet que si l'écart entre le temps évalué et le temps mesuré est faible le chemin physique est quasiment le même. Cette analyse de l'écart peut se faire le cas échéant à chaque étape et permettre de valider les calculs.

On peut alors procéder en utilisant l'algorithme exposé ci-après en procédant à deux séquences de balayage croisé X et Y, par laser infrarouge (ou autre laser lumineux). On procédera par amplification matricielle pour évaluer les indices de réfraction d'une micro-zone ou micro-pavé élémentaire sans division par le carré des indices de réfraction de la zone ou du pavé élémentaire, mais en prenant pour valeur de l'indice de la mini zone celle de la zone.

Pour le coefficient d'atténuation on reviendra aux principes de la division par le facteur d'amplification K.

En admettant dans une première approximation que les chemins optiques peuvent être établis sur la base d'indice de réfraction évalués, on corrigera les indices de réfraction évalués pour minimiser les écarts quadratiques entre indice de réfraction estimé initialement et indice de réfraction ré estimé, en tenant compte des contraintes que constituent les trajectoires réelles.

On peut dans ce cas aussi compléter l'analyse en prenant en compte à nouveau les indices de réfraction ou les atténuations comme décrit ci dessus , et ce en suivant un processus en deux étapes :

1/ une étape avec une large définition (par exemple 1mm)

2/ une étape avec une définition plus fine (par exemple 10 microns)

Le pavage hexagonal présente des avantages qui méritent d'être rappelés. Il couvre bien la totalité d'une surface. La distance entre deux points centraux d'hexagones adjacents est toujours la même. Dans certains cas de la recherche du chemin optique d'un point Ap à un point Bp, le calcul par la méthode des graphes peut être simplifié en utilisant que les vecteurs situés dans un angle limité, ce qui réduit le nombre de trajets à explorer.

Dans le cas du pavage hexagonal, on peut soit diviser chaque hexagones en six triangles équilatéraux, soit établir un premier pavage hexagonal (avec une dimension de 1 mm) et un pavage hexagonal plus fin (avec un pavage de 10 microns) en se servant des informations obtenues dans la première phase pour évaluer la seconde et pour évaluer les indices et les coefficients d'atténuation de la seconde phase. La définition d'un scanner médical permet de discerner des éléments d'environ 1.5mm3, or dans un simple mm3 il y a environ 1 milliard de cellules. Il apparaît, qu'un cancer se développe en trois phases : une phase lente, jusqu'au moment où le nodule atteint une taille critique d'environ 50 microns, une phase de vascularisation, le cancer est relié à l'organisme par un réseau sanguin dont il engendre la mise en place, une phase plus rapide, le cancer devient un véritable organe, parasitant l'organisme en y rejetant des déchets et éventuellement des cellules malignes.

Dans ces conditions, la définition de 1mm est insuffisante pour découvrir un cancer au moment où il amorce une croissance dangereuse grâce à la vascularisation.

Une amélioration de la définition d'un facteur 10 par les procédés conventionnels entraînait : la multiplication par 1 000 du nombre de balayage par un faisceau à rayon X, donc l'irradiation, la multiplication par 1 000 du coût du traitement informatique.

Un premier objectif est de diminuer le nombre de balayage et donc le taux d'irradiation. La recherché d'un processus de traitement de l'image plus rapide est alors nécessaire. Un tel processus peut être fondé sur un algorithme mathématique dont le principe sera exposé plus loin.

Il faut donc d'abord rappeler les principes de la scannographie et l'état actuel de l'art en la matière.

La scannographie (ou tomodensitométrie), a été découverte par un ingénieur de la firme EMI, G. N. Hounsfield, en 1968. Le brevet (US 3 924 131, US 3 919 552) de 1972 s'intitule : "A method and apparatus for examination of a body by radiation such as X or gamma-radiation". Cette invention valut en 1979 le prix NOBEL à son inventeur. Le principe est le suivant :

Un faisceau de rayons X, balaye un plan défini, il traverse un organe de manière linéaire et frappe une plaque ou un détecteur radiographique. La traversée de l'organe provoque une atténuation du faisceau, dont la mesure peut être effectuée grâce au détecteur. Le balayage de manière croisée, dans le plan de coupe, produit une série d'informations traitée par des logiciels appropriés sur un ordinateur associé.

Le traitement informatique d'un nombre suffisant de balayages croisés, définissant en fait des petites cellules ou zones élémentaires, permet la résolution d'un ensemble d'équations linéaires à condition que le nombre de balayages soit égal aux nombre de cellules.

L'édition et l'utilisation de l'information sont effectuées par un ordinateur associé. L'ordinateur collecte l'ensemble des données et calcule ainsi la valeur du coefficient d'atténuation de chaque zone élémentaire. L'information résultant des calculs est traduite par une carte du plan de coupe tomographique.

L'ensemble des cartes constitue l'image scanner en trois dimensions de l'analyse, ce qui autorise des coupes longitudinales ou transversales. L'interprétation médicale s'appuie ainsi sur une véritable image intérieure des tissus. Les explorations sont précédées ou complétées par d'autres explorations par exemple échographie ultrasonore ou imagerie par résonance magnétique.

Le scanner et les méthodes qu'il a initiées restent un outil essentiel de l'exploration médicale. On arrive aujourd'hui à des volumes de chaque zone élémentaire de l'ordre du mm$^3$. C'est cependant loin de l'échelle microscopique puisque le nombre de cellules vivantes est de l'ordre du milliard dans un mm$^3$.

La détection précoce du cancer suppose un gain considérable de la définition. Mais le temps d'utilisation du système pour un patient déterminé ne saurait dépasser un seuil économique évident.

Ainsi la combinaison d'un appareillage à balayage fin, associé à des caches de très faible dimension, positionnables et commutables de manière ultra précise, et, d'un traitement de l'information permettant une évaluation acceptable des valeurs du coefficient d'atténuation de chaque micro zone élémentaire, permet de diviser par un facteur considérable le nombre de jets de faisceaux donc le nombre de profils à enregistrer, tout en portant la définition de un mm à 10 ou 20 microns , sans atteindre un niveau d'irradiation prohibitif.

Pour un examen d'une zone de 20x20 cm , avec une définition de 1mm , telle que pratiquée actuellement , on obtient les coefficients d'atténuation relatifs à 200x200 point soit 40 000 points ce qui nécessite l'établissement de 40 000 profils . Si l'on souhaite obtenir une définition de 10 microns, il faut disposer des valeurs des coefficients d'atténuation d'un nombre de points 10 000 fois plus nombreux, soit 400 millions de points, et infliger au patient un taux d'irradiation létal, mais on est ainsi conduit à des délais et des coûts virtuels prohibitifs quelle que soit d'ailleurs le procédé utilisé, échographique ou par résonance magnétique ;

Dans le procédé ici exposé, il est prévu de réaliser 40 000 profils pour obtenir l'image à faible définition, plus 40 000 profils supplémentaires pour le balayage croisé à haute définition soit au total 80 000 profils au lieu de 400 millions, soit une division par 5000 le nombre de profils et de l'irradiation associée.

Mais il reste à résoudre le problème du traitement du signal, et des valeurs qui lui sont associées.

L'auteur a donc été conduit à mettre au point des méthodes de traitement du signal et de l'information, en vue de résoudre le problème particulier concernant l'évaluation des termes d'une matrice rectangulaire, représentatives des profils de découpage d'une aire déterminée explorée par un scanner lorsque l'on dispose d'estimations approchées relatives à chaque terme, mais d'informations précises concernant la somme de chaque ligne ou colonne de la matrice.

Plusieurs méthodes ont été mises au point et explorées pour résoudre le problème rencontré dans différents contextes de l'imagerie. Les recherches ont conduit à une méthode originale, laquelle permet une simplification considérable du processus de calcul, en vue d'obtenir l'image recherchée, représentée par une matrice rectangle.

Elle permet dans le cas de l'imagerie médicale de limiter le nombre de profils à réaliser.

Cette méthode qui va ici être exposée permet en effet de produire des matrices de plus grande dimension par une répartition ou une extrapolation des valeurs de chaque terme ou zone, d'une matrice initiale de faible définition pour un obtenir des valeurs estimées dans des micro zones, résultant du découpage de chaque terme ou zone, de la matrice initiale.

On obtient ainsi une matrice amplifiée.

Cette matrice amplifiée est alors ajustée par un procédé de calcul permettant d'évaluer de manière fiable chaque terme si l'on peut établir les valeurs des éléments de bordure, un élément de bordure est la somme des termes d'une ligne ou d'une colonne.

Dans ce cas, on peut passer par exemple d'une matrice 5x4 contenant 20 termes en une matrice 25x20, contenant 500 termes, puis calculer chacun des termes par le procédé exposé.

Il y a bien alors, amplification et ajustement de la matrice initiale représentative des signaux obtenus pour la réalisation des différents profils.

La description du procédé d'ajustement est exposée ci dessous , ce procédé joue un rôle particulier dans le calcul effectué après, le cas échéant, obtention d'une matrice de grande dimension à partir d'une matrice initiale plus petite.

La description qui va suivre expose donc la méthode de calcul d'ajustement proprement dite selon l'invention Cette méthode joue un rôle important dans le traitement des signaux résultant de la mesure, par les détecteurs radiographiques, de l'intensité ou de la valeur résiduelle du faisceau élémentaire produit par le dispositif à rayons X, après le parcours dans l'organisme à étudier.

Si l'on veut traiter une matrice de dimensions n lignes et m colonnes

si on appelle Bij la valeur estimée à la ligne i et à la colonne j,

si on appelle Cij la valeur la plus probable du terme correspondant de la matrice,

si on appelle $\rho j$ la somme des termes de la colonne j,

si on appelle cj la somme des termes de la ligne i.

L'estimation de Bij résulte soit du processus d'amplification matricielle, soit de tout autre méthode permettant une telle estimation, notamment à partir des techniques de l'ajustement linéaire ou polynomial.

Dans le,cas présent, on recherchera la solution des valeurs de Cij en tenant compte des contraintes de lignes et de colonnes, c'est à dire le minimum de la fonction :

$$\sum (Cij\text{-}Bij)^2 \text{ Pour toutes valeurs de i et de j}$$

sous les contraintes :

$$\sum Cij = \rho j \text{ pour toutes les valeurs de j}$$

$\sum Cij$ = ci pour toutes les valeurs de i

La recherche d'un minimum de la fonction sous contraintes sera faite en utilisant la méthode des multiplicateurs de Lagrange, le Lagrangien s'écrira :

$$L = - \sum_{ij} (Cij - Bij)^2 + \sum_{j=1}^{m} \lambda j \left( \sum_{i=1}^{n} (Cij - \rho j) \right) + \sum_{i=1}^{n} \mu i \left( \sum_{j=1}^{m} (Cij - ci) \right)$$

Cette fonction est composée de deux parties, une première n'a pas un caractère gauche et la deuxième est un ensemble de relations linéaires.

Le Lagrangien est donc dérivable pour les variables Cij et $\lambda j$ et $\mu i$, multiplicateurs de Lagrange associés aux contraintes de lignes et colonnes (nous disposons en effet de deux groupes de contraintes, les contraintes de ligne et les contraintes de colonne).

Dans ces conditions nous sommes en mesure d'obtenir un ensemble de relations linéaires concernant les Cij par dérivation du Lagrangien et un ensemble de valeur de relations relatives aux valeurs de contraintes, ce qui s'écrit :

En précisant que le dL/dCij désigne une dérivée partielle, de la fonction L pour la variable Cij.

$$\frac{dL}{dCij} = -2 (Cij - Bij) + \lambda j + \mu i = 0$$

et les contraintes

$$\sum_{i=1}^{n} Cij = \rho j , \text{ pour tout } j$$

$$\sum_{j=1}^{m} Cij = ci , \text{ pour tout } i$$

$$1 \Leftrightarrow Cij = Bij + \frac{\lambda j + \mu i}{2}$$

L'ensemble des n*m relations correspondant aux dérivées partielles plus les n+m relations de contraintes est linéaire et n'admet qu'une solution correspondant aux nm+n+m variables.

Si par exemple on veut traiter une matrice où n, le nombre de lignes, est égal à 25 et m, le nombre de colonnes, est égal à 30, la solution par l'algèbre linéaire consiste à traiter :

750 variables Cij

25 variables correspondant aux multiplicateurs de lignes, les $\mu$ i

30 variables correspondant aux multiplicateurs de colonnes, les $\lambda$ j

Un premier objectif est déjà atteint puisque seulement 55 profils doivent être établis au lieu de 750

Nous disposons au total de 750 relations correspondant aux dérivés partielles et de 55 relations correspondant aux contraintes, pour 805 variables. La résolution de ce problème en faisant appel au calcul matriciel est la solution la plus évidente mais elle implique des calculs très lourds légèrement plus lourds que ceux impliqués par les méthodes classiques. L'auteur a d'abord tablé sur l'amélioration rapide des processus de calculs, mais au delà de ce qui était son objectif essentiel la limitation de taux d'irradiation en cours d'examen.

A ce niveau, on peut faire fonctionner un scanner qui limite l'irradiation mais qui entraîne un supplément de coût à cause du calcul engendré par la méthode qui vient d'être exposée.

Si cette méthode permet effectivement une limitation considérable de l'irradiation, (ou du traitement échographique), elle entraîne un processus de calcul tout aussi lourd que les méthodes classiques pour obtenir une estimation, certes généralement suffisante, mais sans accéder à des valeurs précises du coefficient d'atténuation.

Il importait alors de poursuivre la recherche pour tenter d'améliorer le temps de calcul:

Différentes algorithmes ont été utilisées, qui ont permis une certaine amélioration, mais l'auteur a poursuivi sa recherche pour tenter d'améliorer de manière significative le temps de calcul.

De la combinaison des relations précédentes on déduit :

$$\sum_{i=1}^{n} Bij + \frac{n}{2} * \lambda j + (\sum_{i=1}^{n} \mu\, i / 2) = \rho j$$

$$\sum_{i=1}^{m} Bij + \frac{m}{2} * \mu i + (\sum_{j=1}^{m} \lambda\, j / 2) = ci$$

On peut déduire de ces relations :

$$\lambda j = \left(\frac{1}{n}\right) * (2 * (\rho j - \sum_{i=1}^{n} Bij) - \sum_{i=1}^{n} \mu\, i)$$

$$\mu i = \left(\frac{1}{m}\right) * (2(ci - \sum_{j=1}^{m} Bij) - \sum_{j=1}^{m} \lambda\, j)$$

Dans ces conditions en reportant par exemple la valeur de $\lambda j$ dans $\mu i$, on obtient :

$$\text{Pour tout j } \lambda j = \left(\frac{2}{n}\right) * ((\rho j - \sum_{i=1}^{n} Bij) - \sum_{i=1}^{n} \mu\, i)$$

$$\text{Pour tout i } \mu i$$

$$= \left(\frac{1}{n}\right)(\sum_{i=1}^{n} \mu\, i) + \left(\frac{2}{m}\right)(ci - \sum_{j=1}^{m} Bij - \left(\frac{1}{n}\right) * \sum_{j=1}^{m} \rho\, j + \sum ij Bij *$$

$$\left(\frac{1}{n}\right))$$

Si l'on précise que $\mu^- = (i/n)\, \Sigma(i=1\, \text{à}\, n)\, \mu i$ soit la moyenne des multiplicateurs liée à la contrainte des lignes, on est conduit aux deux relations suivantes :

$$\text{Pour tout j } \lambda j = \left(\frac{2}{n}\right) * (\rho j - \sum_{i=1}^{n} Bi) - \mu^-$$

$$\text{Pour tout } i \quad \mu i = \mu^- + \left(\frac{2}{m}\right) * \left( ci - \sum_{j=1}^{m} Bij - \left(\frac{1}{n}\right) * \left(\sum_{j=1}^{m} \rho j - \sum ij Bij \right) \right)$$

En effet $\dfrac{1}{m} \sum_{1}^{m} * \sum_{1}^{n} \mu i$ est égal à $\mu^-$

Dans ces conditions en reportant dans la relation :
Cij = Bij + (½) * (λj+μi) on est conduit à la relation algébrique
Cette formule d'ajustement permet de déduire la matrice des Cij de la matrice des Bij, par un calcul terme à terme

$$Cij = Bij + \left(\frac{1}{n}\right) * \left(\rho j - \sum_{1}^{n} Bij \right) + \left(\frac{1}{m}\right) * \left( ci - \sum_{j=1}^{m} Bij \right) - \left(\frac{1}{nm}\right) * \left( \sum_{j=1}^{m} \rho j - \sum_{ij} Bij \right)$$

L'auteur a ainsi réussi à aboutir de manière tout à fait surprenante à un calcul de nature algébrique ne nécessitant pas le recours au calcul matriciel.
La méthode algébrique autorise le traitement partiel de la matrice de référence qui dans beaucoup de cas peut suffire.
La validation numérique de cette formule de traitement de signaux et d'établissement des valeurs de définition de l'image recherchée sur le plan médical, apparaît ci après.
Exemple d'application de la méthode sur un modèle réduit.
Soit donc une matrice de n lignes et m colonnes dans laquelle n=3, m=4

### TABLEAU 1 MATRICE INITIALE

|           | 1  | 2  | 3  | 4  | Σ lignes | C   |
|-----------|----|----|----|----|----------|-----|
| 1         | 22 | 24 | 18 | 16 | 80       | 78  |
| 2         | 24 | 22 | 18 | 20 | 84       | 85  |
| 3         | 26 | 20 | 22 | 24 | 92.      | 93  |
| Σ colonnes| 72 | 66 | 58 | 60 | 256      |     |
| P         | 70 | 67 | 59 | 60 |          | 256 |

Dans cette matrice, les valeurs estimées sont inscrites, sur les trois lignes et les quatre colonnes, les contraintes de lignes sont inscrites dans la colonne C.
Les contraintes de colonnes sont inscrites dans la dernière ligne P.
L'application de la formule ci dessus se simplifie puisque le total des contraintes de colonnes (ou de lignes) est égal à la somme des termes et conduit à:

### TABLEAU D'EQUILIBRE APRES CALCULS

|    | 1        | 2        | 3       | 4     | Σ2  | C  | Δ |
|----|----------|----------|---------|-------|-----|----|---|
| 1  | 20.83333 | 23.83333 | 17.8333 | 15.5  | 78  | 78 | 0 |
| 2  | 235833   | 22.58333 | 18.5833 | 20.25 | 85  | 85 | 0 |
| 3  | 25.5833  | 20.5333  | 22.583  | 24.25 | 93  | 93 | 0 |
| Σ2 | 70       | 67       | 59      | 60    | 256 |    |   |

(suite)

|   | 1 | 2 | 3 | 4 | Σ2 | C | Δ |
|---|---|---|---|---|---|---|---|
| P | 70 | 67 | 59 | 60 |   |   |   |
| Δ | 0 | 0 | 0 |   |   |   |   |

On peut vérifier, en tenant compte de calculs réalisés par une simple calculatrice que la valeur des termes sommés verticalement ou horizontalement satisfont les contraintes, mais aussi qu'il conduisent bien aux résultats recherchés. Si l'on voulait utiliser l'algèbre linéaire pour résoudre le problème il faudrait alors inverser une matrice d'une taille égale à n * m + n + m soit dans notre cas 19x19, dont le temps de calcul est évidemment beaucoup plus élevé.

La méthode ainsi découverte permet une réduction du temps de calcul dans un rapport considérable (du même ordre de grandeur que la réduction du taux d'irradiation).

A titre d'exemple, pour une matrice 200X200, qui nécessiterait un traitement par l'algèbre linéaire mesurable en heures, on obtient en moins de 2secondes les valeurs des 40 000 termes, leur traduction sous forme colorée et la construction de lignes d'iso atténuation.

Comme exposé précédemment, l'utilisation de tout autre système optique dans le domaine des fréquences ou des longueurs d'ondes proches du visible ou de l'infrarouge, pose le problème de la réfraction des rayons lumineux. Le dispositif selon l'invention résout ce problème.

On peut combiner alors les deux méthodes suivantes :

- la méthode de calcul du chemin optique, pour des balayages multiples, on obtient alors le chemin optique entre par exemple un point A et plusieurs points B1, B2, B3 etc. à chaque chemin optique correspond une équation liant les indices de réfraction des milieux traversés. Si le nombre de balayage est suffisant on obtiendra une évaluation précise des indices de réfraction de chaque mini zone à l'intérieur de l'objet de l'objet examiné par tomodensitométrie.

- La méthode d'amplification et d'ajustement matriciel telle qu'utilisée pour le scanner X, permettra d'améliorer la résolution du système en vue d'obtenir une valeur convenable des indices de réfraction élémentaires de chaque micro zones résultant de la répartition des mini zones par le procédé d'amplification matricielle. On obtient ainsi une image à haute définition donnant des indices de réfraction de chaque micro zones et les coefficients d'absorption ou d'atténuation correspondants. En effet une fois connus les indices de réfraction en tous points on mesurera l'intensité lumineuse résiduelle au bout de chaque trajectoire et l'on localisera les singularités par les méthodes décrites précédemment, analogues à celles utilisées pour le scanner X, en vue d'obtenir non pas seulement une image des indices de réfraction mais une aussi image des coefficients d'atténuation.

La lecture de cette image peut informer l'opérateur sur les singularités se trouvant à l'intérieur de l'objet examiné, soit par un examen deux dimensions, soit par un examen à trois dimensions en traitant successivement plusieurs plans densitométriques.

Ci-après, on décrit deux modes de réalisation d'un dispositif selon l'invention. Deux systèmes sont envisagés, différant essentiellement par le mode de déplacement du faisceau laser dans un plan tomographique. Dans les deux cas, on utilisera de préférence un laser YAG NEODYNE de 1,064 microns de longueur d'onde ou un laser YLF de 1,110 microns de longueur d'onde. L'énergie par impulsion est comprise entre 5 à 10 millijoules. Le faisceau est de dimension modifiable par le système optique, pour varier entre 1 et 5 microns. La durée de l'impulsion est comprise entre 1 à 5 nanosecondes. Elle dépendra notamment du temps de réaction des cellules photoélectriques de lecture. Si le temps de réaction des cellules photoélectriques est de l'ordre de la microseconde, il faudra prévoir des temps d'impulsion de même ordre de grandeur et ajuster en conséquence l'énergie du faisceau. Le laser peut peser plusieurs kilogrammes.

On prévoit également d'utiliser une fibre optique déplaçable au voisinage de l'objet à examiner en étant portée par une tige orientable et elle-même déplaçable sur une rampe. Pour des explorations fines, on prévoit d'établir un faisceau plan de fibres optiques, le faisceau étant lui-même déplaçable et orientable.

Un premier système prévoit que pour chaque plan, le laser a une position fixe et le déplacement du faisceau est effectué grâce à un miroir, déplaçable sur une rampe et orientable par rotation en chaque point de sa position sur la rampe. Un deuxième système,prévoit que le laser se déplace sur la rampe et soit orientable par rotation en chaque point de la rampe.

La vue du premier système apparaît dans la figure 3. Sur cette figure, 30 désigne un plancher, 31 un calage des pieds de supports de la table, 32 des cylindres de support, 33 des tubes coulissants, 35 des tores de téflon qui permettent de filtrer les vibrations, 34 une plaque de support réalisée en matériau indéformable en métal rigide, granit ou marbre, pour filtrer ou amortir toute vibration résiduelle, 36 une fixation du laser sur la plaque, 37 un tube laser, 38 un miroir orientable, 39 une, fixation de la potence sur le support, 41 une plaque de détection composée de cellules photoélectriques, 42 un rail horizontal de la potence, 40 une plaque de protection des cellules pour éviter la surexposition, 43 une tige de support du miroir, 44 un objet à examiner, 45 ou 46 un rayon laser incident, 45' ou 46' un rayon laser parallèle, 47 une plaque de support de l'objet à examiner, rotative, déplaçable et transparente aux infrarouges et 48 une potence.

Le fonctionnement est le suivant. On place la plaque de support 47 à la hauteur désirée en déplaçant, à l'intérieur du cylindre de support 32, le tube coulissant 33 et une plaquette de support des joints toriques 35. Le tube coulissant 33 n'a pas d'autre contact avec le cylindre de support 32 qu'à travers le joint torique 35 de téflon, ce qui filtre pratiquement toute vibration. On déplace la tige de fixation 43 du miroir 38 jusqu'à la position requise, on oriente le miroir 38 et le laser 37 pour que le rayon laser incident 45 soit orienté comme souhaité.

Différents programmes de balayages permettent l'obtention de profils p à basse définition ou de k*p=X+Y tirs en deux séries croisées pour une haute définition. Dans le premier cas, la surface élémentaire de chaque cellule ou pavé micro-élémentaire est de l'ordre du mm2. Dans le second cas, la taille de la cellule élémentaire peut être de l'ordre de 100 microns et descendre jusqu'au micron (limite pratique compte tenu de la longueur d'onde).

Pour obtenir la définition voulue, on fait passer le faisceau par une optique intégrée au tube laser permettant d'augmenter son diamètre au niveau de l'objet à examiner jusqu'à 1 mm ou de le réduire à un micron.

Dans le cas de faibles diamètres, on peut procéder de deux manières, conjointement ou non, en pulsant le fonctionnement pour que la durée d'une impulsion soit réduite de sorte à diminuer les effets thermiques sur l'objet à traverser ou sur les cellules photoélectriques du moyen de détection ou en insérant un dispositif à absorption de l'énergie infrarouge 40. La réalisation d'un plan tomographique s'effectuera donc ainsi :

Dans un premier temps, on réglera le faisceau et l'on ajustera la plaque de détection pour fonctionner par exemple à une définition de un mm et on définira un programme de balayage pour obtenir un nombre de profils égal à la surface en mm2 de la coupe de l'objet et on exécutera le programme de balayage en transférant dans l'ordinateur associé les résultats obtenus sur les cellules.

Dans un deuxième temps, on réglera le faisceau et la plaque de détection pour obtenir la haute définition voulue et on établira un programme de balayage croisé fonction, de la zone à explorer dans la de section de l'objet, de l'angle (généralement droit) entre les deux balayages à haute définition parallèles ou non à haute définition, de l'opacité de l'objet pour régler la durée des impulsions et l'absorption éventuelle.

Les données obtenues au niveau des cellules seront transférées à l'ordinateur qui effectuera le traitement et stockera les résultats.

Dans un troisième temps, on utilisera les résultats du calcul pour faire apparaître une image de chaque plan tomographique grâce à un grapheur utilisant ou non des échelles de gris ou des couleurs.

L'utilisation de l'algorithme exposé précédemment s'effectuera dans des conditions identiques. Le procédé ainsi utilisé permet une très considérable économie de temps de calcul dans des proportions identiques à celle obtenue pour le scanner X.

Dans le mode choisi, le miroir 38 pivote autour d'un axe de rotation, de même que le faisceau laser de sorte à obtenir des rayons traversant parallèles 46 et 46'. On pourra déplacer le miroir à une distance suffisante pour obtenir deux séries X et Y de profils k * p telles que dans chaque série les rayons traversant soient parallèles entre eux et que les deux séries soient sécantes.

On pourra obtenir le volume d'une singularité C en comptant tout simplement dans un plan donné les petits carrés ayant un certain niveau de coloration, puis on ajoutant les chiffres obtenus dans les plans voisins et pour des zones adjacentes, entre deux plans limites définis par observation.

La base de données constituée par l'ensemble des résultats relatifs aux différents plans, permettra de mettre en évidence les zones noires résultant de l'opacité absolue de certaines inclusions, qui empêcherait de percevoir certaines zones ainsi cachées.

Pour éclairer cette zone on pourra procéder de deux manières au moins, faire tourner l'objet à examiner pour obtenir plusieurs images sous différents angles après avoir placé des éléments microscopique de repérage pour reconstituer une image complète ou faire tourner la potence 48 pour obtenir des images de zones cachées.

Dans les deux cas, l'objet à examiner devra être placé et éventuellement fixé sur la plaque 47 transparente, susceptible de tourner autour d'un axe.

Dans ce premier système, la réflexion par le miroir devient difficile pour certaines longueurs d'onde, entraînant des pertes d'énergie lumineuse susceptible de varier avec l'angle de réflexion, ce qui peut compliquer le calcul en obligeant à des mesures de référence plus complexes hors la présence de l'objet.

Par contre, la rotation et la translation du miroir 38 est largement facilitée par son faible poids et ne nécessite alors que des actuateurs piézo de faible puissance.

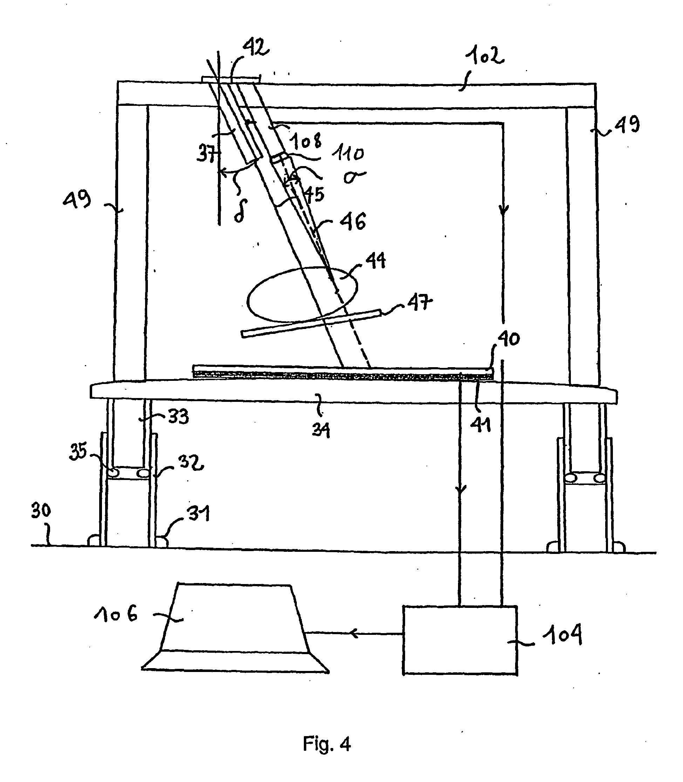

La vue du deuxième système apparaît dans la figure 4, dans laquelle des références identiques désignent des éléments identiques. La référence 49 désigne un cadre.

Le fonctionnement est le suivant.

On place la plaque de support 34 à la hauteur désirée, en déplaçant à l'intérieur du cylindre de support 32 le tube coulissant 33 une plaquette de support des joints toriques 35. On positionne la plaque de support 47 de l'objet à examiner sous l'angle choisi. Puis on procède de la même manière que pour le premier système. Pour illustrer les balayages on se référera à la figure 18 qui montre le déplacement du faisceau 37, à distance d'une première position et le choix d'une nouvelle inclinaison du faisceau 37 pour obtenir deux balayages sécants. Les faisceaux 45 et 45' sont parallèles entre eux dans chacun des balayages.

Dans ce deuxième système, la translation et la rotation du faisceau laser (37) nécessitent des actuateurs plus puissants. Dans ce cas aussi, l'utilisation de l'algorithme exposé précédemment s'effectuera avec le même avantage. Le procédé ainsi utilisé permet une très considérable économie de temps de calcul dans des proportions identiques à celle obtenues pour le scanner X.

On peut remarquer que l'atténuation peut, dans le cas de l'infrarouge, résulter de plusieurs phénomènes, telles une réflexion à l'intérieur de l'objet, une réfraction dans des zones précises et absorption de l'énergie infrarouge transformée en chaleur.

Il sera donc important, de mesurer aussi l'élévation de la température, dans la mesure du possible, dans différentes zones, pour distinguer les différentes sources d'atténuation.

La nature de l'objet est alors importante et la possibilité de faire tourner l'objet pour différentes mesures, permet l'obtention d'informations utiles à l'évaluation des erreurs résultant de la réflexion ou de la réfraction, lesquelles dépendent de la longueur d'onde et de l'indice de réfraction correspondant pour les différents matériaux.

Pour éviter les phénomènes de réflexion, on prévoit de déposer par évaporation sous vide, une couche mince de matériau de faible indice sur une feuille de matière plastique très mince et d'envelopper l'organisme avec cette feuille 50.

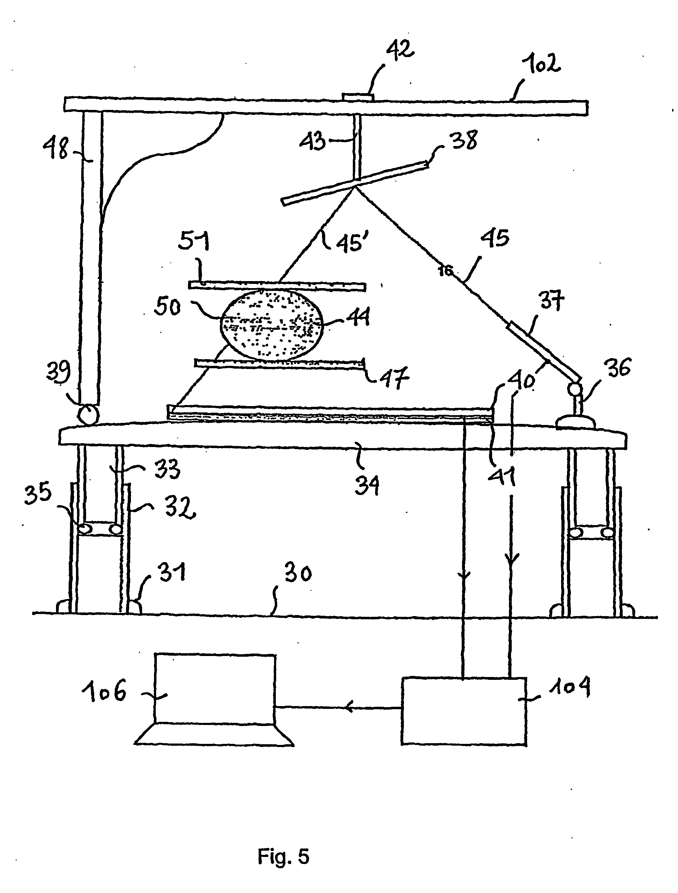

En ce qui concerne la réfraction, dans le cas de l'utilisation d'un laser, c'est à dire de lumière cohérente, le phénomène peut être différent lorsqu'on utilise une lumière non cohérente, mais il existe une certaine réfraction que l'on prévoit de diminuer, figure 5, en disposant l'organisme ou l'objet 44 entre deux plaques transparentes 47 et 51, l'une des plaques formant la plaque de support décrite dans les exemples illustré par les figures 25 et 26, revêtues de couches anti-reflets pour éviter la réflexion et rigoureusement parallèles, pour limiter la réfraction qu'elles peuvent provoquer.

Ainsi, la combinaison des deux systèmes, scanner X ou scanner à laser infrarouge, autorise une amélioration de la qualité d'image et de sa définition.

Mais dans les deux systèmes de scanner infrarouge ici décrits, le procédé selon l'invention permet de diminuer le nombre de profils à réaliser par laser infrarouge, dans des proportions telles pour les hautes définitions que l'élévation de température restera contrôlable, en évitant ainsi un échauffement anormal de l'objet ou de l'organisme étudié ou si le corps traversé comprend des zones dont les indices de réfraction sont voisins.

Comme ceci a déjà été exposé les temps de calculs resteront dans les limites des moyens normaux de traitement de l'information.

La première application est de nature thérapeutique. En effet, on peut détruire un nodule cancéreux ou un groupe de cellules en focalisant le rayonnement d'un laser infrarouge à très haute énergie, mais fonctionnant pendant un temps très court pour détruire une cible à cause de la montée en température de la zone située autour du point focal.

De tels procédés sont utilisés notamment en ophtalmologie. La méthode peut être étendue à d'autres parties du corps, si une reconnaissance peut être faite par le procédé décrit de sorte à obtenir une véritable carte de l'indice de réfraction et des coefficients d'absorption d'une longueur d'onde déterminée. On pourra donc simuler sur écran le chemin optique dans différentes positions d'inclinaison du faisceau et cibler parfaitement le nodule ou le groupe de cellules à atteindre, tout en évaluant grâce aux coefficients d'absorption de l'énergie mise en jeu sur la cible.

En effet le balayage et l'ajustement d'un plan situé dans un objet conduit à évaluer de manière précise les indices de réfractions et les coefficients d'absorption en tout point de l'espace examiné.

Si cette exploration conduit à mettre en évidence une singularité telle que caillot sanguin (notamment cérébraux), tumeur (maligne ou non), il est possible d'agir rapidement pour détruire ladite singularité.

Pour obtenir un tel résultat il faut mettre en oeuvre un dispositif approprié. Comme illustré par la figure 4, ce dispositif comprend une potence à laquelle sont accrochés, un laser d'exploration et un laser de traitement, ces deux lasers peuvent se déplacer le long de la potence et s'incliner pour balayer l'espace situé en dessous. Les deux-lasers fonctionnent préférablement sur la même longueur d'onde, par exemple dans le domaine de l'infrarouge à 1.064 microns, mais leur fonctionnement et leur rôle sont très différents. Un détecteur permettant de mesurer l'intensité lumineuse résiduelle après la traversée de l'objet et de son support transparent, mais aussi la déviation entraînée par la traversée de l'objet. Ce détecteur sera utilisé essentiellement dans la phase d'exploration et il pourra être occulté pour ne pas subir l'effet du laser de traitement dont la puissance peut être beaucoup plus élevée.

Le laser d'exploration sera utilisé pour déterminer les indices de réfraction en tous les points de l'objet, ainsi que cela a été expliqué précédemment.

Le laser de traitement sera utilisé pour focaliser sur la singularité l'énergie élevée du laser de traitement. Ce laser de traitement est donc muni d'une optique permettant la focalisation.

Lé fonctionnement s'effectue donc en deux étapes :

Au cours d'une première étape le laser d'exploration permet de calculer l'indice de réfraction en tous points de la coupe considérée, et de repérer ainsi les singularités qui grâce à la double information dont on dispose, relative aux anomalies des indices de réfraction et aux anomalies des coefficients d'atténuation (ou d'absorption) permettra de faciliter l'identification de la singularité et de la localiser de manière précise.

Au cours d'une deuxième étape on utilisera le laser de traitement de manière répétitive et en focalisant le faisceau sur la singularité à détruire. Pour permettre cette focalisation, il faudra calculer les chemins optiques depuis les différentes extrémités du faisceau jusqu'à la singularité et ajuster grâce à une optique de focalisation, par exemple une lentille 110 déplaçable, le foyer du faisceau pour qu'il se situe dans la zone de la singularité, l'ensemble des calculs des différents chemins optiques est réalisable puisque l'on dispose des différents indices de réfraction. La connaissance prévisible des chemins optiques permet d'ajuster l'optique de focalisation sur la singularité.

On pourra aussi utiliser d'autres longueurs d'onde que l'infra rouge, en fonction du milieu à traiter ou à traverser. Il est même possible d'utiliser un laser disposant d'un système de multiplication de fréquence, comme cela a été proposé par Danièle ARON ROSA et Michèle GRIESEMANN, dans le brevet américain US4309998 intitulé "Process and apparatus for ophthalmic surgery".

En fait, les chemins optiques extrêmes conduiraient en l'absence de l'objet en un point focal virtuel. L'interposition de l'objet déplace le point focal pour qu'il coïncide avec la zone où se trouve la tumeur ou la singularité. Dans un grand nombre de cas où le faisceau et la lentille de focalisation sont coaxiaux, il faudra vérifier que les chemins optiques virtuels sont symétriques par rapport à l'axe du faisceau. Dans le cas contraire, il faudra simuler une translation ou une rotation du laser pour que cette condition de coaxialité soit vérifiée avant de déclencher le tir.

Dans ce cas du laser de traitement, on utilisera de préférence un appareillage comprenant un laser à très haute énergie fonctionnant pendant un temps très court, par exemple 100 femtosecondes, soit $500 \times 10^{-15}$. Si l'énergie que l'on veut concentrer est égale à 1 joule, la puissance du laser se mesure alors en terawatts. Si l'on veut éviter de provoquer des dégâts dans des zones à proximité de la singularité il est préférable de répéter les tirs, par exemple 1500 fois en 100 millisecondes, et déplacer le faisceau par exemple de 100 pas, soit un pas par milliseconde, en franchissant à chaque fois des distances de 10 à 100 microns.

Ceci suppose que la potence puisse permettre des déplacements pas à pas extrêmement rapides et de très faible amplitude et que le laser puisse être commuté plusieurs milliers de fois par seconde. On pourra ainsi provoquer une augmentation de température très élevée dans une zone de petite dimension de 10 à 100 microns, sans provoquer d'échauffement gênant dans les tissus ou voisinage de cette zone.

L'application à un scanner médical à laser infrarouge n'est que l'une des applications possibles du calcul du chemin optique, complété ou non pour mesurer simultanément les indices de réfraction et ou les coefficients d'atténuation ponctuels.

Une deuxième application concerne la détection d'objets situés en milieu aqueux. On peut en effet utiliser certaines longueurs d'ondes au environs de 1.06 microns, qui sont peu absorbées par l'eau pour détecter ou décrire des objets tels que animaux marins, plongeurs, ou tout autres objets sous-marins. Au surplus, il faudra utiliser, dans certains cas, des lasers infrarouge à haute énergie, mesurée en terawatts, pendant des temps très courts mesurés en femtosecondes.

Dans le cas de la recherche de personnes dans un lac, une piscine ou tout autre volume contenant de l'eau, on pourra procéder de la manière suivante :

> effectuer un balayage par un laser infrarouge, en renvoyant par réflexion le faisceau vers un détecteur, et en installant un détecteur à une certaine profondeur, ou en utilisant la réflexion par l'objet lui-même.

Une fois un objet détecté, on pourra braquer une seule caméra infrarouge, pour vérifier la nature de l'objet ou réaliser une opération de scannérisation de l'espace examiné par une séquence de balayage telle que décrit plus haut.

De manière plus générale, lorsque l'on utilise par exemple une caméra ou un appareil de photographie infrarouge, l'image peut être redressée et améliorée s'il on connaît le chemin optique allant de l'appareil à l'objet pour tenir compte des déformations et des déviations entraînées par l'hétérogénéité des indices de réfraction dans le milieu.

La détection d'objet dans un milieu aquatique par des sonars pose en effet le problème de la vitesse de propagation de l'onde acoustique qui dans l'eau est environ 200 000 fois moins rapide qu'une onde lumineuse ou plus généralement électromagnétique

Un objet se déplaçant rapidement par exemple 30 mètres par seconde à 100 mètres de profondeur se déplacera de 6 m pendant l'aller retour de l'onde acoustique , et de seulement et de quelque centaines de microns lorsqu'on utilisera une onde électromagnétique .

Une autre application concerne la détection aérienne. En effet, le balayage d'un espace aérien par laser infrarouge présente bien sûr des avantages par comparaison bien entendu avec toute détection e acoustique mais aussi par comparaison avec des ondes hertzienne, à cause de la finesse du faisceau permettant une meilleure définition de l'image et facilitant la mise en oeuvre d'une imagerie du type de celle décrite dans les brevets précités et donc la reconnaissance et l'identification des formes.

Les systèmes d'alarme bénéficieront aussi des techniques ici exposées, en permettant de détecter tout objet inusité.

La méthode de recherche du chemin optique peut s'appliquer moyennant certains ajustements à la recherche du chemin d'un faisceau sonore ou plutôt ultrasonore, avec laquelle elle peut se combiner, notamment dans le domaine de la thérapie des cancers par faisceau d'ultrasons convergents sur le nodule cancéreux que l'on veut détruire par échauffement thermique, la propagation d'ondes acoustiques, peut alors être analysée en utilisant les équations d'EULER, qui se prêtent à différents procédés permettant le calcul numérique de la propagation d'une onde sonore. Une méthode similaire à celle décrite par l'auteur concernant le chemin optique permettrait aussi de tracer le chemin sonore dans un milieu hétérogène de sorte à simplifier l'approche technique et thérapeutique.

De manière plus générale, en particulier dans les recherches pétrolières, l'analyse des sols bénéficiera largement des recherches en matière de chemin optique ou de chemin acoustique.

Ainsi la méthode de calcul du chemin optique, grâce à l'établissement de graphe des chemins possibles entre deux points, permettant de trouver le chemin optiquement minimal entre deux points, permet de réaliser plusieurs opérations techniques :

- le tracé dans un milieu dont les indices de réfraction de chaque zone est connu afin d'obtenir les coefficients d'absorption en tous points et d'identifier ainsi des singularité.

- le calcul des indices de réfraction en tous points à partir d'estimation même imparfaites de ces indices obtenues par la connaissance du milieu que procure un scanner X, en effectuant un ensemble de balayages laser couvrant la surface étudiée et en réitérant ces balayages si nécessaire.

- la réalisation d'images optiques à haute définition en appliquant les méthodes décrites d'amplification et d'ajustement, facilitant ainsi la mise en oeuvre de scanner à laser infrarouge.

- l'utilisation de la méthode pour la détection rapide d'anomalies ou d'objets précis en milieu liquide ou gazeux.

- en matière thérapeutique, cette méthode permettra une action précise pour la destruction de cellules ou de groupes de cellules malignes ou non en permettant d'établir le chemin optique d'un rayon laser, par exemple infrarouge, et de le focaliser sur la cible que constitue la zone à détruire.

Etant donnée la similitude des lois de la propagation des sons et des lois de la propagation de la lumière, la méthode peut être étendue avec toute précaution d'usage, au tracé de chemin acoustique en milieu hétérogène. Dans ces conditions, la destruction de ces cellules peut s'effectuer aussi après ciblage, en faisant converger sur la zone à traiter un faisceau d'ultrasons à haute énergie, susceptible de provoquer un échauffement destructeur des cellules ciblés.

Moyennant toujours les précautions d'usage, la technique de tracé du chemin acoustique par une méthode similaire à celle décrite dans ce brevet peut aussi faciliter la recherche pétrolière par l'analyse des sols, notamment par sismique réfraction.

**Revendications**

**1.** Dispositif pour déterminer un indice de réfraction en un grand nombre de points p, par exemple 10000, d'un milieu physique (44), chaque point étant repéré par un repère fixe (48,49) en occupant le barycentre d'un pavé élémentaire où p pavés élémentaires (100) réalisent un pavage du milieu physique, **caractérisé en ce qu'**il comprend :

- un laser lumineux (37), par exemple à rayon infrarouge, déplaçable (42) d'un pas élémentaire suivant un guide de déplacement. (102) ou fixe par rapport à un miroir (38) déplaçable (42) du pas élémentaire suivant le guide de déplacement pour effectuer une série de p tirs coplanaires chacun partant d'un point de départ Ap repéré par rapport au guide de déplacement et arrivant en un point d'arrivée Bp repéré par un moyen de détection (40) après avoir traversé le milieu physique (44) en suivant un chemin optique défini comme étant le plus court trajet optique entre les deux points Ap et Bp
- un compteur (104) de temps synchronisé avec chaque tir pour enregistrer un instant Tp où chaque tir atteint le point d'arrivée Bp à compter d'un instant initial où le tir est parti du point de départ Ap ; et
- un ordinateur (106) dûment programmé pour effectuer les étapes suivantes :

(1) rechercher le chemin optique parmi des trajets optiques partant tous du point de départ Ap et arrivant tous au point d'arrivée Bp, chaque trajet optique étant défini par une séquence de chemins optiques élémentaires (L) chacun égal au produit de deux termes où le premier terme est un module d'un vecteur reliant deux barycentres de deux pavés élémentaires adjacents et où le deuxième terme est un indice de réfraction estimé en chaque barycentre ;

(2) à partir de p équations linéaires reliant, pour chacun des p chemins optiques recherchés, les chemins optiques élémentaires (L) et les indices de réfraction (N) au temps de traversée Tp détecté, construire une matrice carrée des chemins optiques élémentaires [L], un vecteur des indices de réfraction des pavés élémentaires [N] et un vecteur des temps de traversée du rayon lumineux [T] et résoudre l'équation matricielle :

$$[N] * [L] = [T]$$

par rapport au vecteur des indices de réfraction des pavés élémentaires [N]; et

(3) réitérer les étapes (1) et (2) pour rechercher de nouveaux chemins optiques avec les indices de réfraction des pavés élémentaires calculés lors d'une itération immédiatement précédente, résoudre l'équation matricielle avec les nouveaux chemins optiques élémentaires correspondant aux nouveaux chemins optiques recherchés et obtenir un nouveau vecteur des indices de réfraction des pavés élémentaires jusqu'à ce que la matrice des chemins optiques élémentaires [L] converge et que le vecteur des indices de réfraction des pavés élémentaires [N] converge également.

2. Dispositif selon la revendication 1, **caractérisé en ce que**, pour déterminer un coefficient d'atténuation en tout point du milieu physique (44) où un indice de réfraction a été déterminé :

- le moyen de détection (40) est conformé pour détecter une variation d'intensité ($\Delta$lp) de chaque tir de la série entre le point de départ Ap et le point d'arrivée Bp en considération d'une atténuation d'intensité lumineuse le long des chemins optiques élémentaires suivis par chaque tir, fonction d'un coefficient d'atténuation E affecté à chaque pavé élémentaire (100) ; et
- l'ordinateur (106) est dûment programmé pour effectuer l'étape supplémentaire suivante :

(4) partir de p équations linéaires reliant les chemins optiques élémentaires (L) pour lesquels le vecteur des indices de réfraction des pavés élémentaires a convergé à l'étape (3) et les coefficients d'atténuation (E) des pavés élémentaires (100) à la variation d'intensité ($\Delta$lp) de chacun des p tirs de la série, construire un vecteur des coefficients d'atténuation des pavés élémentaires [E] et un vecteur des variations d'intensité [$\Delta$lp] puis par une méthode mathématique d'algèbre linéaire, résoudre l'équation matricielle :

$$[E] * [L] = [\Delta lp]$$

par rapport au vecteur des coefficients d'atténuation des pavés élémentaires [E].

3. Dispositif selon la revendication 1 ou 2, **caractérisé en ce que** l'ordinateur (106) effectue l'étape (1) en étant dûment programmé pour rechercher le chemin optique par une méthode de calcul d'un chemin critique minimal à partir d'estimations des indices de réfraction obtenues par une méthode d'imagerie mettant en oeuvre un scanner à rayons X, une unité d'imagerie à résonance magnétique nucléaire ou encore une unité d'échographie.

4. Dispositif selon la revendication 1 ou 2, **caractérisé en ce que**, pour conduire à une estimation des indices de réfraction à plus grande résolution spatiale par rapport au milieu physique :

- le guide de déplacement (102) est pourvu d'un micro-actionneur déplaçant le laser lumineux (37) ou le miroir (38) suivant le guide de déplacement (102) d'un micro-pas élémentaire égal au pas élémentaire divisé par un facteur d'amplification K pour effectuer deux séries croisées de tirs X et Y tirs respectivement, tous coplanaires et partant chacun d'un point de départ Ax ou Ay repéré par rapport au guide de déplacement et arrivant en un point d'arrivée Bx ou By repéré par le moyen de détection après avoir traversé le milieu physique en suivant un chemin optique défini comme étant le plus court trajet optique entre les deux points Ax et Bx ou Ay et By, et
- l'ordinateur (106) est dûment programmé pour effectuer les étapes supplémentaires suivantes :

(5) rechercher le chemin optique parmi un grand nombre de trajets optiques partant tous du point de départ Ax ou Ay et arrivant tous au point d'arrivée Bx ou By en étant définis par une séquence de chemins optiques micro-élémentaires (μL) chacun égal au produit de deux termes où le premier terme est un module d'un vecteur reliant deux barycentres de deux micro-pavés élémentaires adjacents et où le deuxième terme est un indice de réfraction (N') en chaque barycentre de chaque micro-pavé élémentaire égal à l'indice de réfraction du pavé élémentaire dont sont issus les micro-pavés élémentaires après la division par le facteur d'amplification K et pour lesquels le vecteur des indices de réfraction des pavés élémentaires [N] a convergé en (3), et à partir de K*p = X + Y équations linéaires reliant, pour chacun des chemins optiques recherchés de l'une X et de l'autre Y des deux séries de tirs, les chemins optiques micro-élémentaires (μL) et les indices de réfraction des micro-pavés élémentaires (N') au temps de traversée Tx ou Ty détecté à l'aide du compteur de temps synchronisé avec chaque tir atteignant le point d'arrivée Bx ou By à compter d'un instant initial où le tir est parti du point de départ Ax ou Ay, construire une matrice carrée des chemins optiques micro-élémentaires [μL], un vecteur des indices de réfraction des micro-pavés élémentaires [N'] et un vecteur [T] des temps de traversée du rayon lumineux ; puis
(6) ajuster l'indice de réfraction en chaque micro-pavé élémentaire par une méthode des moindres carrés en tenant compte de contraintes imposées par les valeurs de bordures que constituent les temps de traversée détectés Tx ou Ty en utilisant la formule suivante :

$$Cij = Bij + \left(\frac{1}{n}\right)^* (\rho j - \sum_{n}^{n} Bij) + \left(\frac{1}{m}\right)^* (ci - \sum_{j=1}^{m} Bij) - \left(\frac{1}{nm}\right)^*$$

$$(\sum_{j=1}^{m} \rho j - \sum ijBij)$$

où, dans cette formule,

Cij = la valeur recherchée
Bij = la valeur estimée initialement
(n) = le nombre de lignes d'une matrice représentative d'un tableau des indices de réfraction des pavés micro-élémentaires
(m) = le nombre de colonnes d'une matrice représentative d'un tableau des indices de réfraction des pavés micro-élémentaires

$$\sum_{i=1}^{n} Cij = \rho j$$ pour toutes les valeurs de i, la contrainte de la colonne j

$$\sum_{j=1}^{m} Cij = ci$$ pour toutes les valeurs de j, la contrainte de la ligne i.

5. Dispositif selon la revendication 4, **caractérisé en ce que**, pour conduire à une estimation des coefficients d'atténuation à plus grande résolution spatiale par rapport au milieu physique :

- l'ordinateur (106) est dûment programmé pour effectuer les étapes supplémentaires suivantes :

(7) à partir d'une variation d'intensité (Δlx, Δly) détectée par le moyen de détection pour chaque tir des deux séries croisées X et Y entre le point de départ Ax ou Ay et le point d'arrivée Bx ou By en considération d'une atténuation d'intensité lumineuse le long des chemins optiques micro-élémentaires suivis par chaque tir, fonction d'un coefficient d'atténuation (E') affecté à chaque micro-pavé élémentaire en étant égal au coefficient d'atténuation (E) du pavé élémentaire dont sont issus les micro-pavés élémentaires divisé par le facteur d'amplification K et à partir de K*p = X + Y équations linéaires reliant, pour chacun des chemins optiques recherchés de l'une X, et de l'autre Y des deux séries de tirs, les chemins optiques micro-élémentaires (μL) et les coefficients d'atténuation des micro-pavés élémentaires (E') aux variations d'intensité lumineuse (Δlx, Δly), construire une matrice carrée des chemins optiques micro-élémentaires [μL], un vecteur des coefficients d'atténuation des micro-pavés élémentaires [μE'] et un vecteur des variations d'intensité lumineuse [Δl]; et

(8) ajuster le coefficient d'atténuation en chaque micro-pavé élémentaire par une méthode des moindres carrés en tenant compte de contraintes imposées par les valeurs de bordures que constituent les variations d'intensité lumineuses détectées Δlx ou Δly en utilisant la formule suivante :

$$Cij = Bij + \left(\frac{1}{n}\right)^* (\rho j - \sum_1^n Bij) + \left(\frac{1}{m}\right)^* (ci - \sum_{j=1}^m Bij) - \left(\frac{1}{nm}\right)^*$$
$$(\sum_{j=1}^m \rho j - \sum ijBij)$$

où, dans cette formule,

Cij = la valeur recherchée

Bij = la valeur estimée initialement

(n) = le nombre de lignes d'une matrice représentative d'un tableau des coefficients d'atténuation des pavés micro-élémentaires

(m) = le nombre de colonnes d'une matrice représentative d'un tableau des coefficients d'atténuation des pavés micro-élémentaires

$$\sum_{i=1}^n Cij = \rho j$$ pour toutes les valeurs de i, la contrainte de la colonne j

$$\sum_{j=1}^m Cij = ci$$ pour toutes les valeurs de j, la contrainte de la ligne i.

6. Dispositif selon la revendication 1, 2, 3, 4 ou 5, **caractérisé en ce que**, dans le cas où le milieu physique (44) est une partie du corps d'un être humain ou d'un animal et pour traiter une singularité des indices de réfraction représentative d'une tumeur ou d'une autre pathologie d'une partie de ce corps,

- il comprend un laser lumineux de traitement (108) à impulsions pour générer un faisceau pendant un temps très court, par exemple de 100 femtosecondes, et avec une très haute énergie, monté sur le guide de déplacement (102) et pourvu d'une lentille (110) déplaçable pour régler une distance focale et faire converger le faisceau en point focal; et

- l'ordinateur (106) est dûment programmé pour effectuer les étapes supplémentaires suivantes :

(9) rechercher une singularité C parmi les indices de réfraction calculés à l'issue de l'étape (3) ou ajustés à l'issue de l'étape (6) ou parmi les coefficients d'atténuation calculés à l'issue de l'étape (4) ou ajustés à l'issue de l'étape (8) et repérer les pavés ou les micro-pavés élémentaires de la singularité C par rapport au guide de déplacement (102),

(10) rechercher, pour plusieurs points de la lentille, le chemin optique entre un point de départ Aq et la singularité C considérée comme point d'arrivée et calculer un angle de convergence (σ) moyenné sur les différents chemins optiques recherchés partant des différents points de la lentille (110) et vérifiant une condition symétrie par rapport au faisceau, pour régler la distance focale en un point focal virtuel déterminé par l'angle de convergence en considérant que le faisceau voyage dans l'air de sorte à focaliser ce dernier sur le point focal virtuel afin que la singularité C coïncide avec un point focal réel pour être détruite, par exemple par vaporisation, sous l'effet d'impulsions répétées du laser lumineux.

7. Dispositif selon la revendication 1 ou 4, **caractérisé en ce que** le faisceau (37) pivote autour d'un axe se déplaçant (42) lui même linéairement grâce à un moteur pas à pas ou à des actuateurs piézoélectriques.

8. Dispositif selon la revendication 1 ou 4, **caractérisé en ce qu'**il comprend des barrettes de détection multiples (40) pour réaliser simultanément plusieurs images parallèles susceptibles d'un traitement individuel ou en trois dimensions.

9. Dispositif selon la revendication 1, 4 ou 8, **caractérisé en ce qu'**il comprend des supports (48,49) de laser lumineux (37), notamment à infrarouge (37), sur lesquels les moteurs pas à pas ou les actuateurs piézoélectriques permettent d'orienter (α,β) un faisceau lumineux ou de le déplacer.

10. Dispositif selon la revendication 1 ou 4, **caractérisé en ce qu'**un miroir (38) est déplacé par un moteur pas à pas ou par un micro-actionneur suivant le guide de déplacement (102) et sont déplacés en rotation autour d'un pivot, par des actuateurs plézo-électriques, pour réfléchir (45',46') un faisceau laser à infrarouge (45,46) de sorte à effectuer les p tirs coplanaires ou les k*p = X + Y tirs des séries croisés, les rayons infrarouges dans chaque série étant parallèles (45',46') entre eux et sécants d'une série X à l'autre Y.

11. Dispositif selon la revendication 1, **caractérisé en ce qu'**il comprend deux plaques transparentes (47,51), revêtues de couches anti-reflets pour éviter une réflexion du faisceau infrarouge (45') et parallèles pour limiter une réfraction de ce faisceau, l'objet à examiner (44) étant disposé entre les deux plaques et en appui contre l'une d'elle servant de plaque de support (47).

## Claims

1. Apparatus for determining a refractive index in a large number of points p, for example 10000 points, of a physical medium (44), each point being defined by a fixed reference point (48,49) occupying the centre of gravity of an elementary grid unit or block, in which p elementary grid units (100) form a grid-like array of the physical medium, **characterised in that** the apparatus comprises:

   - a light laser (37), for example an infra-red laser, displaceable (42) in elementary steps along a displacement guide (102) or fixed with respect to a mirror (38) displaceable (42) in elementary steps along the displacement guide, in order to carry out a series of p coplanar "shots" each starting from a starting point Ap defined with respect to the displacement guide and arriving at an arrival point Bp defined by a detection means (40), after having passed through the physical medium (44) along an optical path defined as being the shortest optical trajectory between the two points Ap and Bp;
   - a time counter (104) synchronised with each shot so as to record an instant Tp when each shot reaches the arrival point Bp counting from the initial instant when the shot has left the starting point Ap; and
   - a computer (106) suitably programmed to carry out the following steps:

   (1) to investigate the optical path from among the optical trajectories all leaving from the starting point Ap and all arriving at the arrival point Bp, each optical trajectory being defined by a sequence of elementary optical paths (L), each equal to the arithmetic product of two terms, in which the first term is a modulus of a vector connecting two centres of gravity of two adjacent elementary grid units, and in which the second term is an estimated refractive index at each centre of gravity;
   (2) starting from p linear equations connecting, for each of the p investigated optical paths, the elementary optical paths (L) and the refractive indices (N) to the detected passage time Tp, to construct a square matrix of the elementary optical paths [L], a vector of the refractive indices of the elementary grid units [N] and a vector of the passage times of the light ray [T] and to solve the matrix equation;

$$[N] * [L] = [T]$$

   with respect to the vector of the refractive indices of the elementary grid units [N]; and
   (3) to repeat the steps (1) and (2) so as to investigate new optical paths with the refractive indices of the elementary grid units calculated during an immediately preceding iteration, to solve the matrix equation with the new elementary optical paths corresponding to the new investigated optical paths, and obtain a new vector of the refractive indices of the elementary grid units until the matrix of the elementary optical paths [L] converges and the vector of the refractive indices of the elementary grid units [N] also converges.

2. Apparatus according to claim 1, **characterised in that**, in order to determine a coefficient of attenuation at any point of the physical medium (44) where a refractive index has been determined:

   - the detection means (40) is adapted so as to detect a variation of intensity ($\Delta$Ip) of each shot of the series between the starting point Ap and the arrival point Bp taking into consideration an attenuation of the light intensity along the elementary optical paths followed by each shot, which is a function of a coefficient of attenuation E associated with each elementary grid unit (100); and
   - the computer (106) is suitably programmed so as to carry out the following supplementary step:

   (4) starting from p linear equations connecting the elementary optical paths (L) for which the vector of the refractive indices of the elementary grid units has converged in step (3) and the coefficients of attenuation (E) of the elementary grid units (100) to the variation in intensity ($\Delta$Ip) of each of the p shots of the series, to construct a vector of the coefficients of attenuation of the elementary grid units [E] and a vector of the variations of intensity [Alp], and then by a mathematical method involving linear algebra to solve the matrix equation:

$$[E] \ast [L] = [\Delta Ip]$$

   with respect to the vector of the coefficients of attenuation of the elementary grid units [E].

3. Apparatus according to claim 1 or 2, **characterised in that** the computer (106) carries out step (1) by being suitably programmed to investigate the optical path by a method involving the calculation of a minimal critical path from estimates of the refractive indices obtained by an imaging method using an X-ray scanner, a nuclear magnetic resonance imaging unit, or also an echography unit.

4. Apparatus according to claim 1 or 2, **characterised in that**, in order to arrive at an estimate of the refractive indices with a greater spatial resolution with respect to the physical medium:

   - the displacement guide (102) is provided with a micro-actuator displacing the light laser (37) or the mirror (38) along the displacement guide (102) by an elementary micro-step equal to the elementary step divided by an amplification factor K so as to carry out two crossed series of shots X and Y respectively, both coplanar and each starting from a starting point Ax or Ay defined with respect to the displacement guide and arriving at an arrival point Bx or By defined by the detection means after having passed through the physical medium along an optical path defined as being the shortest optical trajectory between the two points Ax and Bx or Ay and By, and
   - the computer (106) is suitably programmed to carry out the following supplementary steps:

   (5) to investigate the optical path among a large number of optical trajectories all starting from the starting point Ax or Ay and all arriving at the arrival point Bx or By, being defined by a sequence of micro-elementary optical paths ($\mu$L) each equal to the arithmetic product of two terms, in which the first term is a modulus of a vector connecting two centres of gravity of two adjacent elementary micro-grid units and in which the second term is a refractive index (N') at each centre of gravity of each elementary micro-grid unit equal to the refractive index of the elementary grid unit from which the elementary micro-grid units are derived after division by the expansion factor K and for which the vector of the refractive indices of the elementary grid units [N] has converged in (3), and from K*p = X + Y linear equations connecting, for each of the investigated optical paths of one series X and the other series Y of the two series of shots, the micro-elementary optical paths ($\mu$L) and the refractive indices of the elementary micro-grid units (N') to the passage time Tx or Ty detected by means of the time counter synchronised with each shot reaching the arrival point Bx or By starting from the initial instant when the shot left the starting point Ax or Ay, to construct a square matrix of the micro-elementary optical paths [$\mu$L], a vector of the refractive indices of the elementary micro-grid units [N'] and a vector [T] of the passage times of the light ray, and then

   (6) to adjust the refractive index in each elementary micro-grid unit by a method of least squares taking into account constraints imposed by the boundary values that are set by the detected passage times Tx or Ty, using the following formula:

$$Cij = Bij + \left(\frac{1}{n}\right)^* (\rho j - \sum_1^n Bij) + \left(\frac{1}{m}\right)^* (ci - \sum_{j=1}^m Bij) - \left(\frac{1}{nm}\right)^*$$

$$(\sum_{j=1}^m \rho j - \sum ijBij)$$

where, in this formula,

Cij is the sought value
Bij is the initially estimated value
(n) is the number of lines of a representative matrix of a table of the refractive indices of the micro-elementary grid units
(m) is the number of columns of a representative matrix of a table of the refractive indices of the micro-elementary grid units

$$\sum_{i=1}^n Cij = \rho j \text{ for all the values of i, the constraint of the column j}$$

$$\sum_{j=1}^m Cij = ci \text{ for all the values of j, the constraint of the line i.}$$

5. Apparatus according to claim 4, **characterised in that**, in order to arrive at an estimate of the coefficients of attenuation with a greater spatial resolution with respect to the physical medium:

- the computer (106) is suitably programmed to carry out the following supplementary steps:

(7) starting from a variation of intensity (Δlx, Δly) detected by the detection means for each shot of the two crossed series of shots X and Y between the starting point Ax or Ay and the arrival point Bx or By and taking into consideration an attenuation of luminous intensity along the micro-elementary optical path followed by each shot, which is a function of a coefficient of attenuation (E') associated with each elementary micro-grid unit and equal to the coefficient of attenuation (E) of the elementary grid unit from which the elementary micro-grid units are derived, divided by the expansion factor K, and from K*p = X + Y linear equations connecting, for each of the investigated obstacle paths of one series X and the other series Y of the two series of shots, the micro-elementary optical paths (μL) and the coefficients of attenuation of the elementary micro-grid units (E') to the variations of luminous intensity (Δlx, Δly), to construct a square matrix of the micro-elementary optical paths [μL], a vector of the coefficients of attenuation of the elementary micro-grid units [μE') and a vector [Δl] of the variations in luminous intensity; and
(8) to adjust the coefficients of attenuation in each elementary micro-grid unit by a method of least squares, taking into account constraints imposed by the boundary values that are set by the detected variations in luminous intensity Δlx or Δly, using the following formula:

$$Cij = Bij + \left(\frac{1}{n}\right)^* (\rho j - \sum_1^n Bij) + \left(\frac{1}{m}\right)^* (ci - \sum_{j=1}^m Bij) - \left(\frac{1}{nm}\right)^*$$

$$(\sum_{j=1}^m \rho j - \sum ijBij)$$

where, in this formula,

Cij is the sought value
Bij is the initially estimated value
(n) is the number of lines of a representative matrix of a table of the coefficients of attenuation of the micro-elementary grid units

(m) is the number of columns of a representative matrix of a table of the coefficients of attenuation of the micro-elementary grid units

$$\sum_{i=1}^{n} Cij = \rho j \text{ for all the values of i, the constraint of the column j}$$

$$\sum_{j=1}^{m} Cij = c_i \text{ for all the values of j, the constraint of the line i.}$$

6. Apparatus according to claim 1, 2, 3, 4 or 5, **characterised in that**, in the case where the physical medium (44) is a part of a human or animal body and in order to treat a singularity of the refractive indices representative of a tumour or another pathological condition of a part of this body,

- it comprises a treatment light laser (108) pulsed so as to generate a beam of very short duration, for example 100 femtoseconds, and with a very high energy, mounted on the displacement guide (102) and provided with a displaceable lens (110) so as to adjust a focal length and to cause the beam to converge at the focal point; and
- the computer (106) is suitably programmed to carry out the following supplementary steps:

(9) to search for a singularity C among the refractive indices calculated on completion of step (3) or adjusted on completion of step (6) or among the coefficients of attenuation calculated on completion of step (4) or adjusted on completion of step (8), and to define the grid units or the elementary micro-grid units of the singularity C with respect to the displacement guide (102), and

(10) to investigate, for a plurality of points of the lens, the optical path between a starting point Aq and the singularity C regarded as the point of arrival, and to calculate a mean angle of convergence ($\sigma$) on the various investigated optical paths starting from different points of the lens (110) and obeying a symmetry condition with respect to the beam, so as to adjust the focal length at a virtual focal point determined by the angle of convergence assuming that the beam travels in air, so as to focus the said beam on the virtual focal point so that the singularity C coincides with a real focal point that can be destroyed, for example by vaporisation, under the action of repeated pulses of the light laser.

7. Apparatus according to claim 1 or 4, **characterised in that** the beam (37) pivots about an axis (42) that itself moves linearly by means of a stepping motor or by means of piezoelectric actuators.

8. Apparatus according to claim 1 or 4, **characterised in that** it comprises multiple detection bars (40) for producing simultaneously a plurality of parallel images capable of being processed individually or in three dimensions.

9. Apparatus according to claim 1, 4 or 8, **characterised in that** it comprises supports (48,49) for a light laser (37), in particular an infra-red light laser (37), on which the stepping motors or the piezoelectric actuators enable a light beam to be oriented ($\alpha,\beta$) or to be displaced.

10. Apparatus according to claim 1 or 4, **characterised in that** a mirror (38) is displaced by a stepping motor or by a micro-actuator along the displacement guide (102) and is displaced by rotation about a pivotal point by means of piezoelectric actuators, in order to reflect (45',46') an infra-red laser beam (45,46) so as to effect the p coplanar shots or the k*p = X + Y shots of the crossed series, the infra-red rays in each case being mutually parallel (45',46') and intersecting both a series X and a series Y.

11. Apparatus according to claim 1, **characterised in that** it comprises two transparent plates (47,51) coated with anti-reflecting layers in order to prevent a reflection of the infra-red beam (45'), and which are parallel in order to limit a refraction of this beam, the object to be examined (44) being arranged between the two plates and resting against one of them serving as support plate (47).

**Patentansprüche**

1. Vorrichtung zur Bestimmung eines Brechungsindexes in einer grossen Anzahl von zum Beispiel 10 000 Punkten p eines physikalischen Mediums (44), wobei jeder Punkt durch einen festen Bezugspunkt (48, 49) festgelegt ist, indem er den Schwerpunkt einer Elementarkachel einnimmt, und wobei p Elementarkacheln (100) eine Parkettierung des physikalischen Mediums realisieren, **dadurch gekennzeichnet, dass** sie umfasst:

- einen Lichtlaser (37), zum Beispiel für Infrarotstrahlen, der einem Bewegungsführer (102) folgend um einen Elemenarschritt bewegt werden kann oder der bezüglich eines Spiegels (38) fixiert ist, der seinerseits dem Bewegungsführer folgend um den Elementarschritt bewegt werden kann (42), um eine Reihe von p koplanaren Strahlen auszusenden, von denen jeder von einem Ausgangspunkt Ap ausgeht, der in Bezug auf den Bewegungsführer festgelegt ist, und an einem Zielpunkt Bp ankommt, der durch Detektormittel (40) festgelegt ist, nachdem er das physikalische Medium (44) durchquert hat, worin er einem optischen Weg gefolgt ist, der als die kürzeste optische Strecke zwischen den beiden Punkten Ap und Bp definiert ist,

- einen Zeitzähler (104), der mit jedem Strahl synchronisiert ist, um einen Zeitpunkt Tp zu verzeichnen, zu dem jeder Strahl den Zielpunkt Bp erreicht, und zwar von einem anfänglichen Zeitpunkt an gerechnet, zu dem der Strahl den Ausgangspunkt Ap verlassen hat; und

- einen Computer (106), der gebührend programmiert worden ist, um die folgenden Schritte auszuführen:

(1) unter allen optischen Strecken, die vom Ausgangspunkt Ap ausgehen und am Zielpunkt Bp ankommen, den optischen Weg zu suchen, wobei jede optische Strecke durch eine Folge von elementaren optischen Wegen (L) definiert ist, deren jeder das Produkt zweier Glieder ist, einem ersten, das der Modul eines Vektors ist, der die beiden Schwerpunkte zweier benachbarter Elementarkacheln verbindet, und einem zweiten, das ein in jedem Schwerpunkt geschätzter Brechungsindex ist;

(2) ausgehend von p linearen Gleichungen, die für jeden der p gesuchten optischen Wege die elementaren optischen Wege (L) und die Brechungsindices (N) mit der erfassten Transitzeit Tp verbinden, eine quadratische Matrix [L] der elementaren optischen Wege, einen Vektor [N] der Brechungsindices der Elementarkacheln und einen Vektor [T] der Transitzeiten des Lichtstrahles zu konstruieren und die Matrixgleichung

$$[N] * [L] = [T]$$

nach dem Vektor [N] der Brechungsindices der Elementarkacheln aufzulösen; und

(3) die Schritte (1) und (2) zu wiederholen, um mit den in einer direkt vorausgehenden Iteration berechneten Brechungsindices der Elementarkacheln neue optische Wege zu suchen, die Matrixgleichung mit den neuen optischen Elementarwegen zu lösen, die den gesuchten neuen optischen Wegen entsprechen, und einen neuen Vektor der Brechungsindices der Elementarkacheln zu gewinnen, bis die Matrix [L] der optischen Elementarwege konvergiert und der Vektor [N] der Brechungsindices der Elementarkacheln ebenfalls konvergiert.

2. Vorrichtung nach Anspruch 1, **dadurch gekennzeichnet, dass** zur Bestimmung eines Abschwächungskoeffizienten an jedem Punkt des physikalischen Mediums (44), an dem ein Brechungsindex bestimmt worden ist,

- die Detektormittel (40) so gestaltet sind, dass unter Berücksichtigung einer Abschwächung der Lichtintensitäten entlang der von jedem Strahl durchlaufenen elementaren optischen Wege eine Intensitätsveränderung (ΔIp) jedes Strahles der Reihe zwischen dem Ausgangspunkt Ap und dem Zielpunkt Bp erkannt wird, und zwar in Abhängigkeit von einem jeder Elementarkachel (100) anhaftenden Abschwächungskoeffizienten E; und

- der Computer (106) gebührend programmiert ist, um den folgenden zusätzlichen Elementarschritt auszuführen:

(4) ausgehend von p linearen Gleichungen, die die elementaren optischen Wege (L), für die der Vektor der Brechungsindices der Elementarkacheln im Schritt (3) konvergiert hat, und die Abschwächungskoeffizienten (E) der Elementarkacheln (100) mit der Intensitätsveränderung (ΔIp) jedes der p Strahlen der Reihe verbinden, einen Vektor der Abschwächungskoeffizienten (E) der Elementarkacheln und einen Vektor der Intensitätsveränderungen (ΔIp) zu konstruieren und dann durch ein mathematisches Verfahren der linearen Algebra die Matrixgleichung

$$[E] * [L] = [\Delta Ip]$$

nach dem Vektor [E] der Abschwächungskoeffizienten der Elementarkacheln aufzulösen.

3. Verfahren nach Anspruch 1 oder 2, **dadurch gekennzeichnet, dass** der Computer (106) den Schritt (1) ausführt, indem er gebührend dafür programmiert ist, den optischen Weg durch ein Berechnungsverfahren eines minimalen kritischen Weges aus Abschätzungen der Brechungsindices zu suchen, die durch ein Abbildungsverfahren gewonnen wurden, worin ein Röntgenscanner, eine Kemspinresonanz-Imaging-Einheit oder eine Sonographie-Einheit eingesetzt werden.

4. Verfahren nach Anspruch 1 oder 2, **dadurch gekennzeichnet, dass** für eine Abschätzung der Brechungsindices mit höherer räumlicher Auflösung bezüglich des physikalischen Mediums:

- der Bewegungsführer (102) mit einem Mikro-Stellglied versehen ist, das den Lichtlaser (37) oder den Spiegel (38) dem Bewegungsführer (102) folgend um einen elementaren Mikroschritt bewegt, der gleich einem Elementarschritt, geteilt durch einen Verstärkungsfaktor K ist, um zwei gekreuzte Reihen von X-Strahlen bzw. Y-Strahlen auszusenden, sämtlich koplanar und ausgehend von einem bezüglich des Bewegungsführers festgelegten Ausgangspunkt Ax bzw. Ay, und nach Durchquerung des physikalischen Mediums auf einem optischen Weg, der als die kürzeste optische Strecke zwischen den beiden Punkten Ax und Bx bzw. Ay und By definiert ist, bei einem durch die Detektormittel festgelegten Zielpunkt Bx bzw. By ankommend, und
- der Computer (106) gebührend programmiert ist, um die folgenden zusätzlichen Elementarschritte auszuführen:

(5) unter einer grossen Anzahl von optischen Strecken, die sämtlich vom Ausgangspunkt Ax bzw. Ay ausgehen und sämtlich am Zielpunkt Bx bzw. By ankommen, und die durch eine Folge von mikroelementaren optischen Wegen ($\mu$L) definiert sind, deren jeder das Produkt zweier Glieder ist, eines ersten, das der Modul eines Vektors ist, der die beiden Schwerpunkte von zwei benachbarten elementaren Mikrokacheln verbindet, und eines zweiten, das ein Brechungsindex (N') in jedem Schwerpunkt jeder elementaren Mikrokachel ist und das gleich dem Brechungsindex der Elementarkachel ist, aus der nach Teilung durch den Verstärkungsfaktor K die elementaren Mikrokacheln hervorgegangen sind und für die der Vektor [N] der Brechungsindices der Elementarkacheln im Schritt (3) konvergierte, und ausgehend von $K*p = X + Y$ linearen Gleichungen, die für jeden der gesuchten optischen Wege der einen X und anderen Y der beiden Reihen von Strahlen die mikroelementaren optischen Wege ($\mu$L) und die Brechungsindices (N') der elementaren Mikrokacheln mit der Transitzeit Tx oder Ty verbinden, die ausgehend von einem Anfangszeitpunkt, wo der Strahl vom Ausgangspunkt Ax bzw. Ay abgegangen ist, mit Hilfe des Zeitzählers erfasst wurde, der mit jedem Strahl synchronisiert war, der den Zielpunkt Bx bzw. By erreichte, einen optischen Weg zu suchen, eine quadratische Matrix [$\mu$L] der mikroelementaren optischen Wege sowie einen Vektor [N'] der Brechungsindices der elementaren Mikrokacheln und einen Vektor [T] der Transitzeiten des Lichtstrahles zu konstruieren; dann
(6) den Brechungsindex in jeder elementaren Mikrokachel durch ein Verfahren der kleinsten Quadrate anzupassen, wobei die Constraints berücksichtigt werden, die durch die Randwerte auferlegt werden, die durch die erfassten Transitzeiten Tx bzw. Ty gebildet werden, indem die folgende Formel verwendet wird:

$$ \mathrm{Cij} = \mathrm{Bij} + \left(\frac{1}{n}\right) * \left(\rho j - \sum_1^n Bij\right) + \left(\frac{1}{m}\right) * \left(ci - \sum_{j=1}^m Bij\right) - \left(\frac{1}{nm}\right) * \left(\sum_{j=1}^m \rho j - \sum ij Bij\right) $$

wobei in dieser Formel

Cij = der gesuchte Wert,
Bij = der anfänglich geschätzte Wert,
(n) = die Anzahl der Zeilen einer Matrix, die für eine Tabelle der Brechungsindices der elementaren Mikrokacheln repräsentativ ist,
(m) = die Anzahl der Spalten einer Matrix, die für eine Tabelle der Brechungsindices der elementaren Mikrokacheln repräsentativ ist,

$$ \sum_{i=1}^n Cij = \rho j \quad \text{der Constraint der Spalte j für alle Werte von i,} $$

$$\sum_{j=1}^{m} Cij = \text{ci}$$  der Constraint der Zeile i für alle Werte von j.

**5.** Vorrichtung nach Anspruch 4, **dadurch gekennzeichnet, dass** zu einer Abschätzung der Abschwächungskoeffizienten mit grösserer räumlicher Auflösung bezüglich des physikalischen Mediums:

- der Computer (106) gebührend programmiert ist, um die folgenden zusätzlichen Elementarschritte auszuführen:

(7) ausgehend von einer für jeden Strahl der beiden gekreuzten Reihen X und Y zwischen dem Ausgangspunkt Ax bzw. Ay und dem Zielpunkt Bx bzw. By unter Berücksichtigung einer Abschwächung der Lichtintensität entlang der durch jeden Strahl verfolgten mikroelementaren optischen Wege durch die Detektormittel erfassten Veränderung ($\Delta$Ix, $\Delta$Iy) der Intensität in Abhängigkeit von einem Abschwächungskoeffizienten (E'), der jeder elementaren Mikrokachel anhaftet, und der gleich dem Abschwächungskoeffizienten (E) der Elementarkachel, aus der die elementaren Mikrokacheln hervorgegangen sind, geteilt durch den Verstärkungsfaktor K ist, und ausgehend von K*p = X + Y linearen Gleichungen, die für jeden der gesuchten optischen Wege des einen X und des anderen Y der beiden Reihen von Strahlen die mikroelementaren optischen Wege ($\mu$L) und die Abschwächungskoeffizienten (E') der elementaren Mikrokacheln mit den Veränderungen ($\Delta$Ix, $\Delta$Iy) der Lichtintensität verbinden, eine quadratische Matrix [$\mu$L] der mikroelementaren optischen Wege, einen Vektor [$\mu$E'] der Abschwächungskoeffizienten der elementaren Mikrokacheln und einen Vektor [$\Delta$I] der Veränderungen der Lichtintensität zu konstruieren; und
(8) den Brechungsindex in jeder elementaren Mikrokachel durch ein Verfahren der kleinsten Quadrate anzupassen, wobei die Constraints berücksichtigt werden, die durch die Randwerte auferlegt werden, die durch die erfassten Veränderungen $\Delta$Ix bzw. $\Delta$Iy der Lichtintensität gebildet werden, indem die folgende Formel verwendet wird:

$$Cij = Bij + \left(\frac{1}{n}\right) * (\rho j - \sum_{1}^{n} Bij) + \left(\frac{1}{m}\right) * (\text{ci} - \sum_{j=1}^{m} Bij) - \left(\frac{1}{nm}\right) * (\sum_{j=1}^{m} \rho j - \sum ijBij)$$

wobei in dieser Formel

Cij = der gesuchte Wert,
Bij = der anfänglich geschätzte Wert,
(n) = die Anzahl der Zeilen einer Matrix, die für eine Tabelle der Brechungsindices der elementaren Mikrokacheln repräsentativ ist,
(m) = die Anzahl der Spalten einer Matrix, die für eine Tabelle der Brechungsindices der elementaren Mikrokacheln repräsentativ ist,

$$\sum_{i=1}^{n} Cij = \rho j$$  der Constraint der Spalte j für alle Werte von i,

$$\sum_{j=1}^{m} Cij = \text{ci}$$  der Constraint der Zeile i für alle Werte von j.

**6.** Vorrichtung nach Anspruch 1, 2, 3, 4 oder 5, **dadurch gekennzeichnet, dass** in dem Falle, wo das physikalische Medium (44) ein Teil des Körpers eines Menschen oder eines Tieres ist, und um eine Singularität der Brechungsindices zu behandeln, die für einen Tumor oder eine andere Pathologie eines Teiles dieses Körpers repräsentativ ist,

- diese einen Behandlungs-Lichtpulslaser (108) zur Erzeugung eines Strahles einer sehr hohen Energie während einer sehr kurzen Zeit von z.B. 100 Femtosekunden umfasst, der auf den Bewegungsführer (102) montiert und mit einer Linse (110) versehen ist, die verschoben werden kann, um eine Brennweite einzustellen und den Strahl im Brennpunkt konvergieren zu lassen; und
- der Computer (106) gebührend programmiert ist, um die folgenden zusätzlichen Elementarschritte auszuführen:

(9) unter den im Ergebnis des Schrittes (3) berechneten oder im Ergebnis des Schrittes (6) angepassten Brechungsindices oder unter den im Ergebnis des Schrittes (4) berechneten oder im Ergebnis des Schrittes (8) angepassten Abschwächungskoeffizienten eine Singularität C zu suchen und die elementaren Kacheln bzw. Mikrokacheln der Singularität C bezüglich des Bewegungsführers (102) festzulegen;

(10) für mehrere Punkte der Linse den optischen Weg zwischen einem Ausgangspunkt Aq und der Singularität C zu suchen, die als Zielpunkt betrachtet wird, und einen Konvergenzwinkel (σ) zu berechnen, der über die verschiedenen gesuchten optischen Wege gemittelt wurde, die von den verschiedenen Punkten der Linse (110) ausgehen und eine Symmetriebedingung bezüglich des Strahles bewahren, um die Brennweite auf einen virtuellen Brennpunkt einzustellen, der durch den Konvergenzwinkel bestimmt ist, wobei berücksichtigt wird, dass der Strahl so in der Luft verläuft, dass er auf den virtuellen Brennpunkt fokussiert wird, damit die Singularität mit einem wirklichen Brennpunkt zusammenfällt, um unter der Einwirkung der wiederholten Laserlichtpulse zum Beispiel durch Verdampfung zerstört zu werden.

**7.** Vorrichtung nach Anspruch 1 oder 4, **dadurch gekennzeichnet, dass** sich der Strahl (37) um eine Achse dreht, die ihrerseits (42) durch einen Schrittmotor oder durch Piezoaktoren linear bewegt wird.

**8.** Vorrichtung nach Anspruch 1 oder 4, **dadurch gekennzeichnet, dass** sie Mehrfach-Detektorstreifen (40) umfasst, um gleichzeitig mehrere parallele Bilder zu realisieren, die einer individuellen oder dreidimensionalen Behandlung unterworfen werden können.

**9.** Vorrichtung nach Anspruch 1, 4 oder 8, **dadurch gekennzeichnet, dass** sie Träger (48, 49) für Lichtlaser (37) und insbesondere Infrarotlaser (37) umfasst, auf denen die Schrittmotoren oder die Piezoaktoren einen Lichtstrahl zu orientieren ($\alpha$, $\beta$) oder zu verschieben gestatten.

**10.** Vorrichtung nach Anspruch 1 oder 4, **dadurch gekennzeichnet, dass** ein Spiegel (38) dem Bewegungsführer (102) folgend durch einen Schrittmotor oder ein Mikro-Stellglied bewegt und durch Piezoaktoren um einen Drehzapfen gedreht wird, um einen Infrarot-Laserstrahl (45, 46) so zu reflektieren (45', 46'), dass die p koplanaren Strahlen oder die k*p = X + Y Strahlen der gekreuzten Reihen ausgesendet werden, wobei in jeder Reihe die Infrarotstrahlen parallel (45', 46') zueinander sind und die Strahlen einer Reihe X die der anderen Reihe Y schneiden.

**11.** Vorrichtung nach Anspruch 1, **dadurch gekennzeichnet, dass** sie zwei durchsichtige Platten (47, 51) umfasst, die von Antireflex-Schichten überzogen sind, um eine Reflexion des Infrarotstrahles (45') zu vermeiden, und die parallel sind, um eine Brechung dieses Strahles zu begrenzen, wobei der zu prüfende Gegenstand (44) zwischen den beiden Platten angeordnet wird und sich an einer davon abstützt, die als Stützplatte (47) dient.

Fig. 1

Fig. 2

Fig. 3

Fig. 4

Fig. 5

34

**EP 1 774 289 B1**

## RÉFÉRENCES CITÉES DANS LA DESCRIPTION

**Documents brevets cités dans la description**

- US 4792227 A
- US 5588032 A
- US 3924131 A
- US 3919552 A
- US 4309998 A